(19) Europäisches Patentamt / European Patent Office / Office européen des brevets

(11) **EP 4 425 403 A1**

(12) **EUROPEAN PATENT APPLICATION**

(43) Date of publication:
04.09.2024 Bulletin 2024/36

(21) Application number: 24159424.1

(22) Date of filing: 23.02.2024

(51) International Patent Classification (IPC):
*G06Q 10/20* (2023.01)   *B60W 60/00* (2020.01)
*G06Q 50/04* (2012.01)   *G07C 5/00* (2006.01)
*G05D 1/698* (2024.01)

(52) Cooperative Patent Classification (CPC):
**G06Q 10/20; B60W 60/001; B60W 60/00186;
B60W 60/0025; G05D 1/6987; G06Q 50/04;
G07C 5/006; G07C 5/008;** G05D 2105/45;
G05D 2107/70; G05D 2109/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023 JP 2023030925
19.10.2023 JP 2023180231**

(71) Applicant: **TOYOTA JIDOSHA KABUSHIKI
KAISHA**
**Toyota-shi, Aichi-ken, 471-8571 (JP)**

(72) Inventors:
• **IWAHORI, Kento**
  **TOYOTA-SHI, AICHI-KEN, 471-8571 (JP)**
• **YOKOYAMA, Daiki**
  **TOYOTA-SHI, AICHI-KEN, 471-8571 (JP)**

(74) Representative: **Cabinet Beau de Loménie
158, rue de l'Université
75340 Paris Cedex 07 (FR)**

(54) **MOVING OBJECT, SERVER DEVICE, SYSTEM, AND METHOD FOR MANAGING ON-MOVING OBJECT DEVICE**

(57)    A moving object comprises an unmanned driving mode that has at least one of a first driving mode in which the moving object moving by autonomous control and a second driving mode in which the moving object moving by remote control: an on-moving object device mounted on the moving object; and a moving object control device configured to control an operation of the moving object, wherein the moving object control device includes: a device identification information acquisition unit that acquires device identification information, which is identification information of the on-moving object device; a moving object identification information acquisition unit that acquires moving object identification information, which is identification information of the moving object; and a transmission unit that transmits the device identification information and the moving object identification information to a server device.

Fig.1

EP 4 425 403 A1

**Description**

BACKGROUND

FIELD

The present disclosure relates to a vehicle, a server device, a vehicle system, and a method for managing an on-vehicle device.

RELATED ART

Vehicles that are automatically driven within a manufacturing system for manufacturing vehicles by remote control and the like have hitherto been known (JP2017-538619A).

When a vehicle automatically runs by remote control and the like, it is desirable to properly manage which vehicle is equipped with an on-vehicle device, which is mounted on a vehicle. These problems are common not only in vehicles but also in moving objects.

SUMMARY

The present disclosure can be realized by the following aspects.

(1) According to the first aspect of the present disclosure, a moving object is provided. The moving object comprises an unmanned driving mode that has at least one of a first driving mode in which the moving object moving by autonomous control and a second driving mode in which the moving object moving by remote control: an on-moving object device mounted on the moving object; and a moving object control device configured to control an operation of the moving object, wherein the moving object control device includes: a device identification information acquisition unit that acquires device identification information, which is identification information of the on-moving object device; a moving object identification information acquisition unit that acquires moving object identification information, which is identification information of the moving object; and a transmission unit that transmits the device identification information and the moving object identification information to a server device. According to the above aspect, the moving object is capable of acquiring the device identification information and the moving object identification information and transmitting the device identification information and the moving object identification information to the server device. This allows appropriate management as to which of the moving objects capable of moving in an unmanned driving mode is equipped with the on-moving object device using the server device.

(2) In the aspect above, the vehicle may further comprise a state quantity acquisition unit that acquires a state quantity indicating a state of the on-moving object device, wherein the transmission unit transmits the state quantity to the server device, in addition to the device identification information and the moving object identification information. According to the above aspect, the moving object is further capable of acquiring the state quantity. This allows the moving object to transmit the state quantity to the server device, in addition to the device identification information and the moving object identification information. Therefore, the state of the on-moving object device can be managed using the server device.

(3) In the aspect above, the state quantity acquisition unit may acquire the state quantity, which is at least one of a first state quantity, which is the state quantity at a timing before the moving object moves in the unmanned driving mode, and a second state quantity, which is the state quantity at a timing when the moving object is moving in the unmanned driving mode between production sites where each production step is performed during a process of manufacturing the moving object, in association with the timing corresponding to the state quantity. According to the above aspect, the moving object is capable of acquiring at least one of the first state quantity and the second state quantity in association with the timing corresponding to the state quantity. This makes it possible to clarify which timing the state quantity is at when the state of the on-moving object device is managed using the server device.

(4) In the aspect above, the state quantity acquisition unit may acquire the state quantity multiple times at different timings. According to the above aspect, the moving object is capable of generating time series data representing time series changes in the state quantity using state quantities acquired multiple times at different timings.

(5) In the aspect above, the moving object may further comprise an abnormality determination unit that performs a determination process, which is at least one of (1a) an abnormality determination process for determining whether the state of the on-moving object device is a normal state or an abnormal state, and (1b) an adjustment determination process for determining whether or not to recommend maintenance of the on-moving object device, using the state quantity acquired by the state quantity acquisition unit. According to the above aspect, the moving object is capable of performing the determination process, which is at least one of the abnormality determination process and the adjustment determination process, using the acquired state quantity. This allows the moving object to determine whether the state of the on-moving object device is a normal state or an abnormal state by performing the abnormality determination process. Further, by performing the adjustment determination process, the moving object can determine whether or not to recommend the maintenance of the on-moving object device.

(6) In the aspect above, the moving object may further comprise an instruction unit that provides a route change instruction to change a destination when the moving object moves in the unmanned driving mode from a predetermined target location to a maintenance site where at least one of a replacement process for replacing the on-moving object device mounted on the moving object with another on-moving object device and a repair process for repairing the on-moving object device mounted on the moving object is performed, in at least one of (2a) a first case in which it is determined in the abnormality determination process that the state of the on-moving object device is an abnormal state, and (2b) a second case in which it is determined in the adjustment determination process that maintenance of the on-moving object device is recommended. According to the above aspect, in at least one of the first case and the second case, the moving object can provide an instruction to change the destination when the moving object moves in an unmanned driving mode to the maintenance site. This allows the moving object to move in the unmanned driving mode to the maintenance site where the on-moving object device is repaired or replaced in the first case or the second case.

(7) In the aspect above, a plurality of the moving objects may be moving between the production sites, and the abnormality determination unit may perform the determination process by relative comparison of the state quantity acquired for each of the plurality of the moving objects. According to the above aspect, the moving object is capable of performing the determination process by relative comparison of the state quantity acquired for each of the plurality of moving objects moving between the production sites.

(8) In the aspect above, the abnormality determination unit may perform the determination process by relative comparison of at least the state quantity acquired from a target moving object, which is one of the plurality of the moving objects, and the state quantity acquired from an adjacent moving object, which is the moving object moving either before or after the target moving object. According to the above aspect, the moving object is capable of performing the determination process by relative comparison between at least the state quantity acquired from the target moving object and the state quantity acquired from the adjacent moving object.

(9) In the aspect above, the state quantity acquisition unit may acquire the state quantity multiple times at different timings for each of the plurality of the moving objects, and the abnormality determination unit may perform the determination process by relative comparison of time series data that represent time series changes in the state quantity and that are acquired for each of the plurality of the moving objects. According to the above aspect, the moving object is capable of performing the determination process using the time series data acquired for each of the plurality of moving objects. This allows for compensation for variation in the state quantity, thereby enabling more reliable determination of the state of the on-moving object device or necessity of maintenance even if there is variation in the state quantity for each of the plurality of moving objects acquired at the same timing.

(10) According to the second aspect of the present disclosure, a server control device including a transmission information acquisition unit that acquires device identification information, which is identification information of an on-moving object device mounted on a moving object configured to be capable of moving by unmanned driving, and moving object identification information, which is identification information of the moving object; and a storage unit that stores a database in which the acquired device identification information and the acquired moving object identification information are associated with each other, wherein the moving object has an unmanned driving mode that has at least one of a first driving mode in which the moving object moving by autonomous control and a second driving mode in which the moving object moving by remote control. According to the above aspect, the server device is capable of acquiring the device identification information and the moving object identification information and storing the database in which the device identification information and the moving object identification information are associated with each other. This allows appropriate management as to which of the moving objects capable of moving in an unmanned driving mode is equipped with the on-moving object device.

(11) In the aspect above, the server control device may further include a state quantity acquisition unit that acquires a state quantity indicating a state of the on-moving object device, the transmission information acquisition unit may acquire the state quantity, in addition to the device identification information and the moving object identification information, and the database may be an assembly of data in which the device identification information, the moving object identification information, and the state quantity are associated with each other. According to the above aspect, the server device is further capable of acquiring the state quantity. This allows for management of the state of the on-moving object device mounted on the moving object that is capable of moving by an unmanned driving mode.

(12) In the aspect above, the transmission information acquisition unit may acquire the state quantity, which is at least one of a first state quantity, which is the state quantity at a timing before the moving object moves in the unmanned driving mode, and a second state quantity, which is the state quantity at a timing when the moving object is moving in the unmanned driving mode between production sites where each production step is performed during a process of manufacturing the moving object, in association with the timing corresponding to the state quantity. According to the above aspect, the server device is capable of acquiring at least one of the first state quantity and the second state quantity in association with the timing corresponding to the state quantity. This makes it possible to clarify which timing the state quantity is at when the state of the on-moving object device is managed.

(13) In the aspect above, the transmission information acquisition unit may acquire the state quantity multiple times at different timings. According to the above aspect, the server device is capable of generating time series data representing time series changes in the state quantity using state quantities acquired multiple times at different timings.

(14) In the aspect above, the server device may further comprise an abnormality determination unit that performs a determination process, which is at least one of (3a) an abnormality determination process for determining whether the state of the on-moving object device is a normal state or an abnormal state, and (3b) an adjustment determination process for determining whether or not to recommend maintenance of the on-moving object device, using the state quantity acquired by the transmission information acquisition unit. According to the above aspect, the server device is capable of performing the determination process, which is at least one of the abnormality determination process and the adjustment determination process, using the acquired state quantity. This allows the server device to determine whether the state of the on-moving object device is a normal state or an abnormal state by performing the abnormality determination process. Further, by performing the adjustment determination process, the server device can determine whether or not to recommend the maintenance of the on-moving object device.

(15) In the aspect above, the server device may further comprise an instruction unit that provides a route change instruction to change a destination when the moving object moves in the unmanned driving mode from a predetermined target location to a maintenance site where at least one of a replacement process for replacing the on-moving object device mounted on the moving object with another on-moving object device and a repair process for repairing the on-moving object device mounted on the moving object is performed, in at least one of (4a) a first case in which it is determined in the abnormality determination process that the state of the on-moving object device is an abnormal state, and (4b) a second case in which it is determined in the adjustment determination process that maintenance of the on-moving object device is recommended. According to the above aspect, in at least one of the first case and the second case, the server device can provide an instruction to change the destination when the moving object moves in an unmanned driving mode to the maintenance site. This allows the moving object to move in the unmanned driving mode to the maintenance site where the on-moving object device is repaired or replaced in the case where the state of the on-moving object device is in an abnormal state or in the case where maintenance of the on-moving object device is recommended.

(16) In the aspect above, a plurality of the moving objects may be moving between the production sites, and the abnormality determination unit may perform the determination process by relative comparison of the state quantity acquired for each of the plurality of the moving objects. According to the above aspect, the server device is capable of performing the determination process by relative comparison of the state quantity acquired for each of the plurality of moving objects moving between the production sites.

(17) In the aspect above, the abnormality determination unit may perform the determination process by relative comparison of at least the state quantity acquired from a target moving object, which is one of the plurality of the moving objects, and the state quantity acquired from an adjacent moving object, which is the moving object moving either before or after the target moving object. According to the above aspect, the server device is capable of performing the determination process by relative comparison between at least the state quantity acquired from the target moving object and the state quantity acquired from the adjacent moving object.

(18) In the aspect above, the transmission information acquisition unit may acquire the state quantity multiple times at different timings for each of the plurality of the moving objects, and the abnormality determination unit may perform the determination process by relative comparison of time series data that represent time series changes in the state quantity and that are acquired for each of the plurality of the moving objects. According to the above aspect, the server device is capable of performing the determination process using the time series data acquired for each of the plurality of moving objects. This allows for compensation for variation in the state quantity, thereby enabling more reliable determination of the state of the on-moving object device or necessity of maintenance even if there is variation in the state quantity for each of the plurality of moving objects acquired at the same timing.

(19) According to the third aspect of the present disclosure, a moving object configured to be capable of moving by unmanned driving and a server device, the moving object having an unmanned driving mode that has at least one of a first driving mode in which the moving object moving by autonomous control and a second driving mode in which the moving object moving by remote control the moving object comprising: an on-moving object device mounted on the moving object; and a moving object control device configured to control an operation of the moving object, wherein the moving object control device includes: a device identification information acquisition unit that acquires device identification information, which is identification information of the on-moving object device; a moving object identification information acquisition unit that acquires moving object identification information, which is identification information of the moving object; and a transmission unit that transmits the device identification information and the moving object identification information to the server device, and the server device includes: a server control device including a transmission information acquisition unit that acquires the device identification information and the moving object identification information; and a storage unit that stores a database in which the acquired device identification information and the acquired moving object identification information are associated with each other. According to the above aspect, the moving object is capable of acquiring the device identification information and the moving object identification information and transmitting the device identification information and the moving object identification information to the server device. Further, the server device is capable of acquiring the device identification information and the moving object identification information and storing the database in which the device identification information and the moving object identification information are associated with each other. This allows appropriate management as to which of the moving objects capable of moving in an unmanned driving mode is equipped with the on-moving object device using the server device.

(20) According to the fourth aspect of the present disclosure, a method for managing an on-moving object device mounted on a moving object configured to be capable of moving by unmanned driving, the moving object having an unmanned driving mode that has at least one of a first driving mode in which the moving object moving by autonomous control and a second driving mode in which the moving object moving by remote control, the method for managing the on-moving object device comprising: a device identification information acquisition step of acquiring device identification information, which is identification information of the on-moving object device; a moving object identification information acquisition step of acquiring moving object identification information, which is identification information of the moving object; and a storage step for storing a database in which the acquired device identification information and the acquired moving object identification information are associated with each other. According to the above aspect, it is possible to acquire the device identification information and the moving object identification information and store the database in which the device identification information and the moving object identification information are associated with each other. This allows appropriate management as to which of the moving objects capable of moving in an unmanned driving mode is equipped with the on-moving object device.

The present disclosure can be realized in various aspects other than the moving object, the server device, the moving object system, and the method for managing the on-moving object device described above. For example, the present disclosure can be realized by various aspects, such as a moving object, a server device, and a method for producing a moving object system, a method for producing a control device that executes a method for managing an on-moving object device, a computer program that implements the method for managing the on-moving object device, a non-transitory storage medium storing the computer program, and the like.

BRIEF DESCRIPTION OF THE DRAWINGS

Fig. 1 is a diagram for explaining a method for managing an on-vehicle device by using a vehicle system;
Fig. 2 is a diagram for explaining a method for remote control of a vehicle by using a server device;
Fig. 3 is a block diagram illustrating a schematic structure of a first step management device;
Fig. 4 is a block diagram illustrating a schematic structure of a second step management device;
Fig. 5 is a diagram for explaining a schematic structure of a vehicle;
Fig. 6 is a block diagram illustrating a schematic structure of a system in the first embodiment;
Fig. 7 is a block diagram illustrating a schematic structure of a vehicle control device in the first embodiment;
Fig. 8 is a block diagram illustrating a schematic structure of a server device in the first embodiment;
Fig. 9 is a flowchart showing a processing procedure for running control of the vehicle in the first embodiment;
Fig. 10 is a flowchart illustrating details of a database writing step according to the first embodiment;
Fig. 11 is a flowchart illustrating details of a database generation step according to the first embodiment;
Fig. 12 is a schematic diagram illustrating an example of the database;
Fig. 13 is a flowchart illustrating details of the database update step according to the first embodiment;
Fig. 14 is a flowchart illustrating details of an operation control step for the vehicle using the database;
Fig. 15 is a flowchart illustrating details of an abnormality determination step according to the first embodiment;
Fig. 16 is a conceptual diagram illustrating an example of a clustering method for state quantity;
Fig. 17 is a flowchart illustrating details of an abnormality determination step according to a second embodiment;
Fig. 18 is a diagram illustrating an example of a clustering method for time series data;
Fig. 19 is a flowchart illustrating details of an abnormality determination step according to a third embodiment.
Fig. 20 is a block diagram illustrating a schematic structure of a system in the fourth embodiment;
Fig. 21 is a block diagram illustrating a schematic structure of a vehicle control device in the fourth embodiment;

Fig. 22 is a block diagram illustrating a schematic structure of a server device in the fourth embodiment; and
Fig. 23 is a flowchart showing a processing procedure for running control of the vehicle in the fourth embodiment.

DETAILED DESCRIPTION

A. First Embodiment

A-1. Configuration of Vehicle System and Running Embodiment

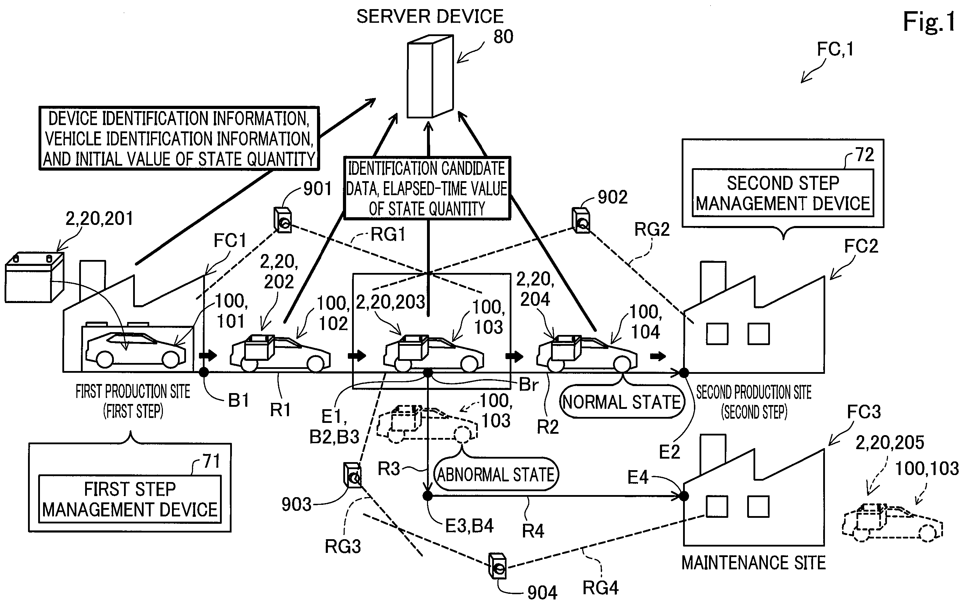

Fig. 1 is a diagram for explaining a method for managing an on-vehicle device 2 using a system 1. The system 1 includes one or more vehicles 100 as moving objects and a server device 80. The system 1 is a system that manages a device 2 (hereinafter referred to as an on-vehicle device 2) mounted on the vehicle 100 through communication between the vehicle 100 and the server device 80. The system 1 manages the state of the on-vehicle device 2 and as to which vehicle 100 is equipped with the on-vehicle device 2. The on-vehicle device 2 is, for example, an engine or a driving motor as a driving power source of the vehicle 100, a battery as an electric power source of the vehicle 100, or a damper to damp vibrations generated in the vehicle 100 during running. In the present embodiment, the target on-vehicle device 2 subject to the management by the system 1 is a main battery 20 that supplies electric power to the driving motor. To be noted, the on-vehicle device 2 is not limited to this type.

In the present disclosure, the "moving object" means an object capable of moving, and is a vehicle or an electric vertical takeoff and landing aircraft (so-called flying-automobile), for example. The vehicle 100 may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle 100 includes a battery electric vehicle (BEV), a gasoline automobile, a hybrid automobile, and a fuel cell automobile. When the moving object is other than a vehicle 100, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100. In the following, the unmanned driving mode in which the vehicle runs by autonomous control is also referred to as the "first driving mode" and the unmanned driving mode in which the vehicle runs by remote control is also referred to as the "second driving mode. In this embodiment, the vehicle 100 runs at least some sections in the factory FC by remote control by the server device 80 in the second operation mode.

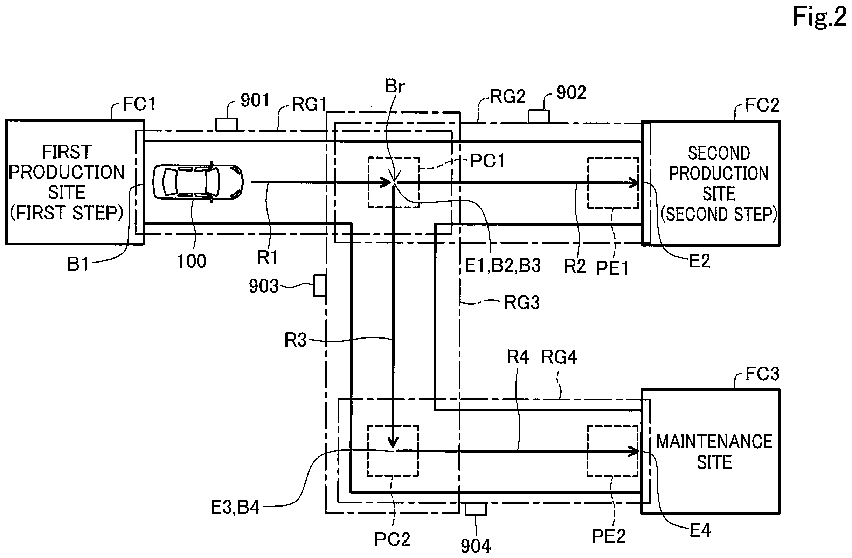

Fig. 2 is a diagram for explaining the running route of the vehicle 100 and a method for remote control of the vehicle 100 by the server device 80. In this embodiment, the system 1 is used in a factory FC that manufactures vehicles 100. The reference coordinate system of the factory FC is a global coordinate system. That is, any location in the factory FC can be expressed by X, Y, and Z coordinates in the global coordinate system. In the present embodiment, a factory FC includes a first production site FC1 where a first step as a pre-process is performed, a second production site FC2 where a second step as a process after the first step is performed, tracks R1 and R2 connecting the first production site FC1 and the second production site FC2, and a plurality of external sensors. In the present embodiment, the first step is a step of mounting the main battery 20 as the on-vehicle device 2 on the vehicle 100. As shown in Fig. 1, the first production site FC1 includes a first step management device 71. Further, the second step is a process performed after the first step, and is, for example, a step of inspecting the vehicle 100. The vehicle 100 having been through the first step and left the first production site FC1 becomes an in-process product to be subjected to the second step, and is sent to the second production site FC2 upon receiving permission to start the second step, i.e., permission to enter the second production site FC2. The second production site FC2 includes a second step management device 72.

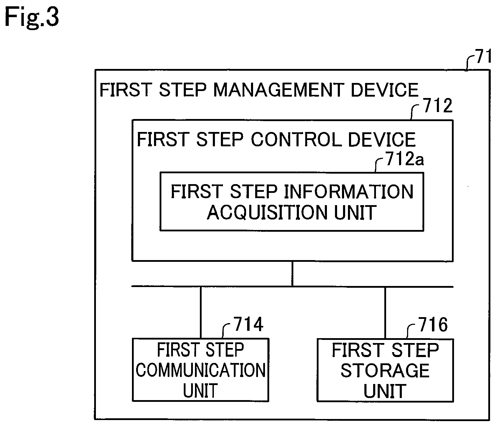

Fig. 3 is a block diagram illustrating a schematic structure of the first step management device 71. The first step management device 71 is an information processing device that manages the production status of the first step.

The first step management device 71 includes a first step control device 712 as a central processing unit, a first step communication unit 714 for performing communication with the server device 80, and a first step storage unit 716 having RAM, ROM, and the like. These components are connected to one another via internal buses, etc. The first step control device 712 functions as a first step information acquisition unit 712a by expanding a program stored in the first step storage unit 716. The first step information acquisition unit 712a acquires the production status of the vehicle 100 in the first step from cameras (not shown), sensors (not shown), and the like provided in the first production site FC1. The first step information acquisition unit 712a then transmits the acquired production status of the first step to the server device 80 via the first step communication unit 714.

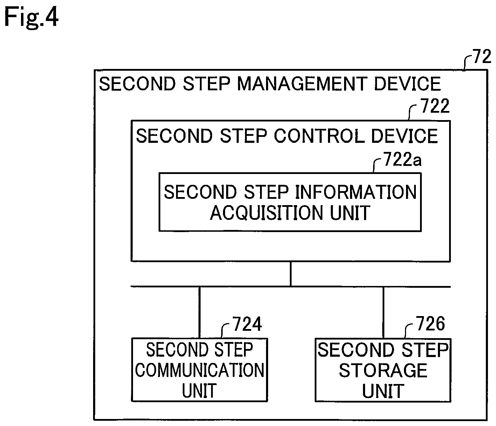

Fig. 4 is a block diagram illustrating a schematic structure of the second step management device 72. The second step management device 72 is an information processing device that manages the production status of the second step. The second step management device 72 includes a second step control device 722 as a central processing unit, a second step communication unit 724 for performing communication with the server device 80, and a second step storage unit 726 having RAM, ROM, and the like. These components are connected to one another via internal buses, etc. The second step control device 722 functions as a second step information acquisition unit 722a by expanding a program stored in the second step storage unit 726. The second step information acquisition unit 722a acquires the production status regarding the vehicle 100 in the second step from cameras (not shown), sensors (not shown), and the like provided in the second production site FC2. The second step information acquisition unit 722a then transmits the acquired production status of the second step to the server device 80 via the second step communication unit 724.

As shown in Fig. 1, after the main battery 20 as the on-vehicle device 2 is mounted on the vehicle 100 in the first step performed in the first production site FC1, the vehicle 100 runs on a first track R1 and a second track R2 in this order in unmanned driving mode to the second production site FC2, where the second step takes place. The first track R1 and the second track R2 are transport paths (roads) connecting the first production site FC1 and the second production site FC2. Specifically, as shown in Fig. 2, the first track R1 is a transport path that connects the first production site FC1 to a branching point Br that branches into a third track R3, which is described later. In other words, a first starting end B1, which is the starting end of the first track R1, is located at the first production site FC1. A first terminal end E1, which is the terminal end of the first track R1, is located at the branching point Br that branches into the third track R3. The second track R2 is a transport path that connects the branching point Br that branches into the third track R3 to the second production site FC2. Specifically, the second starting end B2, which is the starting end of the second track R2, is located at the branching point Br that branches into the third track R3. The second terminal end E2, which is the terminal end of the second track R2, is located at the second production site FC2. In the present embodiment, the first track R1 and the second track R2 are connected in a straight line. Further, the first production site FC1 is a production site as a starting point of the vehicle 100 when the vehicle 100 runs in the second driving mode. The second production site FC2 is the target location that is determined in advance as the destination when the vehicle 100 runs in the second driving mode.

Fig. 1 illustrates a first vehicle 101, a second vehicle 102, a third vehicle 103, and a fourth vehicle 104 as a plurality of vehicles 100 that run in the second driving mode from the first production site FC1 to the second production site FC2 in this order. In the following, each of the vehicles 101 to 104 will be simply referred to as "the vehicle 100" when it is not necessary to distinguish them from one another. Further, when it is necessary to distinguish the on-vehicle devices 2 in the respective vehicles 100 one another, the on-vehicle device 2 mounted on the first vehicle 101 is referred to as a first on-vehicle device 201. The on-vehicle device 2 mounted on the second vehicle 102 is referred to as a second on-vehicle device 202. The on-vehicle device 2 mounted on the third vehicle 103 is referred to as a third on-vehicle device 203. The on-vehicle device 2 mounted on the fourth vehicle 104 is referred to as a fourth on-vehicle device 204. When it is not necessary to distinguish the on-vehicle devices 201 to 204 one another, they are simply referred to as "the on-vehicle device 2".

At this time, the third vehicle 103 is determined to be a vehicle 100 in which the main battery 20 is in an abnormal state and therefore maintenance is recommended. Therefore, after departing from the first production site FC1, the third vehicle 103 runs from the branching point Br provided between the first track R1 and the second track R2 to the third track R3 and the fourth track R4 in this order toward a maintenance site FC3. That is, in the present embodiment, the factory FC further includes the maintenance site FC3 and the track R3 and the track R4 that connect the first production site FC1 to the maintenance site FC3. As shown in Fig. 2, the third track R3 is a transport path that connects the branching point Br that branches from the first track R1 and the second track R2 to the fourth track R4. Specifically, a third starting end B3, which is the starting end of the third track R3, is located at the branching point Br that branches from the first track R1 and the second track R2. In the present embodiment, the first track R1 and the third track R3 are connected via a right-angle curve. The fourth track R4 is a transport path that connects a third terminal end E3, which is the terminal end of the third track R3, to the maintenance site FC3. Specifically, a fourth starting end B4, which is the starting end of the fourth track R4, is at the same location as that of the third terminal end E3. A fourth terminal end E4, which is the terminal end of the fourth track R4, is located at the maintenance site FC3. In the present embodiment, the third track R3 and the fourth track R4 are connected via a right-angle curve. Further, the maintenance site FC3 is a place where at least one of a replacement process to replace the on-vehicle device 2 mounted on the vehicle 100 with another on-vehicle device 2, and a repair process to repair the on-vehicle device 2 mounted on the vehicle 100 is performed. Fig. 1 illustrates a case where, at the maintenance site FC3, the third on-vehicle device 203 mounted on the third vehicle 103 is detached and another on-vehicle device 2, i.e., a fifth on-vehicle device 205, is newly installed.

Each of the production sites FC1 to FC3 is not limited to, for example, a single building or those present at one property or one address. Each of the production sites FC1 to FC3 where each production step of the production process is performed may be present across multiple buildings, multiple properties, multiple addresses, and the like. In other words, when the vehicle 100 runs between the production sites FC1 to FC3, the vehicle 100 may run between the production sites FC1 to FC3 located at multiple places. Therefore, for example, in order to run between the production sites FC1 to FC3 located at multiple places, the vehicle 100 may run not only on private roads but also on public roads that exist between the production sites FC1 to FC3. In this specification, both a vehicle completed as a product and a vehicle as a semi-finished product or in-process product, which is on the halfway of production, are collectively referred to as "the vehicle 100".

The external sensor is a sensor located outside of the vehicle 100. The external sensor in this embodiment is a sensor that captures the vehicle 100 from outside the vehicle 100. The external sensor is equipped with a communication device (not shown) and can communicate with other devices such as the server device 80 through wired or wireless communication.

As shown in Figure 2, in this embodiment, the external sensor is a camera. Cameras 901-904 (hereinafter referred to as "external cameras 901-904") as external sensors acquire an captured image of the vehicle 100 and output the captured image as a detection result. The external cameras 901 to 904 are cameras or other devices that capture images of the predetermined imaging ranges RG1 to RG4 in order to acquire location ,etc. of the vehicle 100 running between the production sites FC1 to FC3. Specifically, the external cameras 901 to 904 acquire a bird's-eye image of the tracks R1 to R4 and the vehicle 100 running on the tracks R1 to R4 from above. These images captured by the imaging cameras 901 to 904 are used for remote control of the vehicle 100 by the server device 80. The number and the positions of the external cameras 901 to 904 to be installed in the factory FC are determined by considering the angle of view or the like of the external cameras 901 to 904 so as to capture the entire image of the plurality of tracks R1 to R4. Specifically, each of the external cameras 901 to 904 is installed so that the imaging ranges RG1 to RG4 (angle of view) of the imaging devices 901 to 904 overlap each other at connection positions of the tracks R1 to R4, such as positions PC1 and PC2. In the present embodiment, the factory FC is equipped with a first external camera 901, a second external camera 902, a third external camera 903, and a fourth external camera 904. The first external camera 901 is a camera that captures an image of the imaging range RG1 that includes the entire part of the first track R1. The second external camera 902 is a camera that captures an image of the imaging range RG2 that includes the entire part of the second track R2. The third external camera 903 is a camera that captures an image of the imaging range RG3 that includes the entire part of the third track R3. The fourth external camera 904 is a camera that captures an image of the imaging range RG4 that includes the entire part of the fourth track R4. In this way, automatic running of the vehicle 100 can be achieved by remote control without using internal sensors as sensors mounted on the vehicle 100, such as cameras, millimeter wave radar, LiDAR, and the like. In order to prevent, for example, collisions between multiple vehicles 100 under the remote control, at least some of the internal sensors mounted on the vehicle 100 may be used to assist the acquisition of the location, etc. of the vehicle 100 running in the second driving mode. Further, the external cameras 901 to 904 are not limited to capturing images from above the vehicle 100 and may also acquire images from the front, behind, side, and the like of the vehicle 100.

As shown in Fig. 2, when the vehicle 100 runs from the first production site FC1 to the second production site FC2, the vehicle 100 having been left the first production site FC1 runs on the first track R1 to the branching position PC1 by remote control in which the captured image acquired from the first external camera 901 is analyzed. The branching position PC1 includes the terminal end E1 of the first track R1. Then, when the vehicle 100 reaches the branching position PC1, the vehicle 100 runs on the second track R2 to a first terminal end position PE1, which includes the terminal end E2 of the second track R2, by remote control in which the captured image acquired from the second external camera 902 is analyzed instead of the captured image acquired from the first external camera 901. That is, in the first reference route as a reference route, which is a reference route from the first production site FC1 to the second production site FC2, the target steering angle of the wheel is set to 0 degree to prevent the vehicle 100 from rotating in any direction at the branching position PC1.

When the vehicle 100 runs from the first production site FC1 to the maintenance site FC3, the vehicle 100 having been left the first production site FC1 runs on the first track R1 to the branching position PC1 by remote control in which the captured image acquired from the first external camera 901 is used. When the vehicle 100 reaches the branching position PC1, the vehicle 100 changes its direction at the branching position PC1 to follow the third track R3. That is, in the second reference route as the reference route, which is a reference route from the first production site FC1 to the maintenance site FC3, the target steering angle of the wheel is set so that the vehicle 100 turns 90 degrees clockwise (right turn) at the branching position PC1. The vehicle 100 then runs along the third track R3 to a direction change position PC2, which includes the terminal end E3 of the third track R3, by remote control in which the captured image acquired from the third external camera 903 is used instead of the captured image acquired from the first external camera 901. When the vehicle 100 reaches the direction change position PC2, the vehicle 100 changes its direction at the direction change position PC2 to follow the fourth track R4. That is, in the second reference route, for example, the target steering angle of the wheel is set so that the vehicle 100 turns 90 degrees counterclockwise (left turn) at the direction change position PC2. The vehicle 100 then runs along the fourth track R4 to a second terminal end position PE2, which includes the terminal end E4 of the fourth track R4, by remote control in which the captured image acquired from the fourth external camera 904 is analyzed instead of the captured image acquired from the third external camera 903.

The timing for the vehicle 100 having left the first production site FC1 to arrive at the first terminal end position PE1 is adjusted so that the timing has a small difference from the target production time (tact time) and coincides with the timing when the vehicle can enter the second production site FC2, from the viewpoint of improving production efficiency. The timing for the vehicle 100 to arrive at the second production site FC2, i.e., the timing for the vehicle 100 to arrive at the first terminal end position PE1, is adjusted, in consideration of, for example, the process time of each step, the timing of leaving the first production site FC1, and the running speed of the vehicle 100 on the tracks R1 and R2. The method for remote control of the vehicle 100 by the server device 80 is not limited that described above. Further, the positional relationship between the production sites FC1 to FC3 and the numbers and the arrangements of the tracks R1 to R4 are not limited to those shown above.

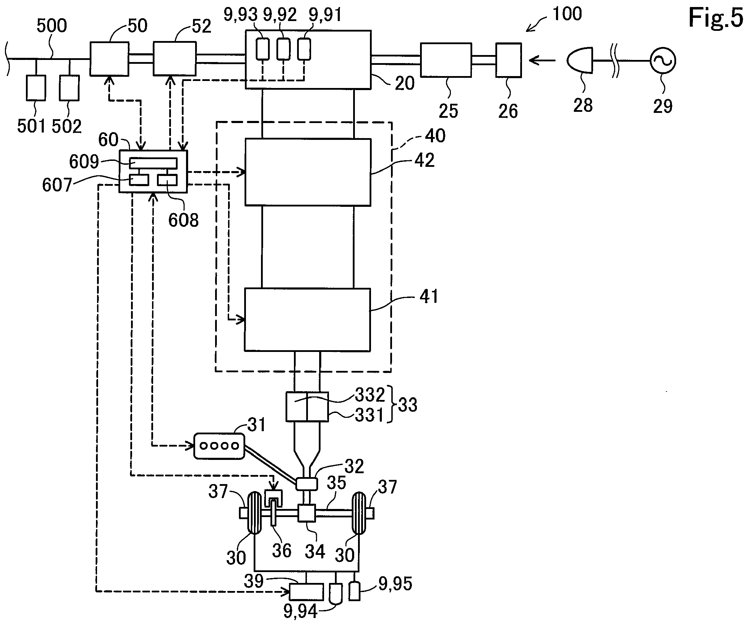

Fig. 5 is a diagram for explaining a schematic structure of the vehicle 100. The vehicle 100 is equipped with a vehicle control device 60 for controlling various parts of the vehicle 100, a group of actuators including one or more actuators driven under the control of the vehicle control device 60, and a communication device for communicating with an external device such as a server device 80 by wireless communication. The actuator group includes actuators of the drive device for accelerating the vehicle 100, actuators of the steering device for changing the direction of the vehicle 100, and actuators of the braking device for decelerating the vehicle 100.

In the present embodiment, the vehicle 100 is a hybrid vehicle that runs by the driving force of at least one of an engine 31 as an internal combustion engine and a driving motor 33 as a motor generator. Specifically, the vehicle 100 has an EV running mode in which the vehicle 100 is driven by the driving motor 33 as the driving power source with the engine 31 stopped, and an HV running mode in which the vehicle 100 is driven by the engine 31 as well as the driving motor 33 as the driving power sources. Fig. 5 shows, as an example of hybrid vehicle, a plug-in hybrid electric vehicle (PHEV) in which the main battery 20 for supplying electric power to the driving motor 33 is rechargeable by electric power from an external power source 29. The type of the vehicle 100 is not limited to this. The vehicle 100 may be, for example, a hybrid vehicle that does not have mechanisms 25 and 26 for charging the main battery 20 with electric power from the external power source 29. Further, the vehicle 100 may be, for example, an electric vehicle driven solely by the driving motor 33 as the driving power source, or a gasoline or diesel vehicle driven solely by the engine 31 as the driving power source. Further, the vehicle 100 may be, for example, a fuel cell vehicle equipped with a fuel cell as the main battery 20. Further, the vehicle 100 is not limited to private vehicles such as a passenger car, but may also be business-purpose vehicles such as a truck, a bus, a construction vehicle, and the like.

The vehicle 100 is equipped with wheels 30, the engine 31, a dynamic power dividing mechanism 32, the driving motor 33, a reduction gear 34, an axle 35, a friction brake 36 as a braking device, the main battery 20, a charger 25, a vehicle-side connector 26, and an electric power converter 40.

The engine 31 is an internal combustion engine fueled by gasoline or other fuel gas. The engine 31 is a first driving power source for the vehicle 100. The driving force generated by the engine 31 is transmitted to the wheels 30 via the reduction gear 34.

The dynamic power dividing mechanism 32 is a planetary gear mechanism that includes a sun gear, a pinion gear, a carrier, and a ring gear. The dynamic power dividing mechanism 32 distributes the driving force generated by the engine 31 to the axle 35 and the driving motor 33.

The driving motor 33 has a first motor 331 and a second motor 332. The first motor 331 generates driving power using at least one of the electric power stored in the main battery 20 and the electric power generated by the second motor 332. The first motor 331 is a second driving power source for the vehicle 100. The driving force generated by the first motor 331 is transmitted to the wheels 30 via the reduction gear 34. Upon the braking or the like of the vehicle 100, the first motor 331 is driven by the wheels 30 via the reduction gear 34. In response to this, the first motor 331 performs regenerative power generation. The second motor 332 generates electricity using the driving force of the engine 31 divided by the dynamic power dividing mechanism 32. The electric power generated by the second motor 332 using the driving force of the engine 31 is used to charge the main battery 20 and to drive the first motor 331.

The main battery 20 drives the first motor 331 and also provides electric power to an auxiliary battery 50, which is described later. The main battery 20 is a secondary battery that can be repeatedly charged and discharged. The main battery 20 is, for example, a lithium-ion battery or a nickel-metal hydride battery. The output voltage value of the main battery 20 is, for example, 100 volts or higher.

The charger 25 converts AC current supplied from the external power source 29, such as a commercial power source, into DC current and outputs the converted current to the main battery 20. The charger 25 controls the amount of electric power to charge the main battery 20 in response to a control signal from the vehicle control device 60.

The vehicle-side connector 26 is a connecting member to be used to connect the charger 25 to the external power source 29. The vehicle-side connector 26 is connected to the charger 25 and is configured to be connectable to a power source-side connector 28, which is connected to the external power source 29.

The electric power converter 40 includes an inverter 41 and a first converter 42. The inverter 41 performs current control while converting the DC current of the main battery 20 with the AC current of the driving motor 33. The inverter 41 is connected between the driving motor 33 and the first converter 42. The first converter 42 performs electric power conversion between the main battery 20 and the inverter 41. Specifically, the first converter 42 raises the output voltage of the main battery 20 and supplies the raised electric power to the first motor 331. Further, the first converter 42 decreases the voltage of the electric power generated by the driving motor 33 and supplies the decreased electric power to the main battery 20. The first converter 42 is connected between the main battery 20 and the inverter 41.

The vehicle 100 is further equipped with the auxiliary battery 50, one or more auxiliary machines 501 and 502, a second converter 52, a damper 37, a steering device 39, a measurement unit 9, an engine ECU 607, a motor ECU 608, and an HV-ECU 609.

The auxiliary battery 50 supplies electric power to the one or more auxiliary machines 501 and 502 mounted on the vehicle 100 via the auxiliary power line 500. The "auxiliary machines 501 and 502" refer to, for example, a room lamp, a car navigation device, and the like. The output voltage value of the auxiliary battery 50 is lower than that of the main battery 20, and, for example, is 12 volts. The auxiliary battery 50 is charged by receiving electric power from the main battery 20 via the second converter 52.

The second converter 52 is a step-down DC/DC converter that decreases the voltage of the output electric power of the main battery 20 and supplies the decreased electric power to the auxiliary battery 50. The second converter 52 is connected between the main battery 20 and the auxiliary battery 50.

To ensure that the steering angle of the steering wheel (not shown) matches the target steering angle of the wheels 30 included in the running control signal transmitted from the vehicle control device 60, the steering device 39 rotates the steering shaft by torque from the steering motor (not shown) according to the running control signal. This enables the steering device 39 to perform automatic steering control, in which the wheels 30 are automatically steered without any steering operation by the driver, in the unmanned driving mode.

The measurement unit 9 includes one or more sensors that measures various physical and other quantities necessary to control the operation and the like of the vehicle 100. In the present embodiment, the measurement unit 9 includes a current sensor 91, a voltage sensor 92, a battery temperature sensor 93, a wheel speed sensor 94, and a steering angle sensor 95. The current sensor 91 measures an actual output current value of the main battery 20. The voltage sensor 92 measures an actual output voltage measurement value (potential difference) of the main battery 20. The battery temperature sensor 93 measures the temperature of the main battery 20. The wheel speed sensor 94 measures the rotation rate (hereinafter referred to as "wheel speed") of each wheel 30. The steering angle sensor 95 measures an actual steering angle of each wheel 30. Each of the various sensors 91 to 95 constituting the measurement unit 9 transmits the measurement values acquired by the measurement to the vehicle control device 60.

The engine ECU 607 controls the operation state of the engine 31. The motor ECU 608 controls the operations of the driving motor 33 and the inverter 41, the charging and discharging state of the main battery 20, and the like, according to the state of the vehicle 100. The HV-ECU 609 controls the entire vehicle 100 by mutually managing and controlling the engine ECU 607, and the motor ECU 608, etc. Although Fig. 5 shows each of the ECUs 607 to 609 as a separate structure, two or more of the ECUs 607 to 609 may be integrated to serve as the vehicle control device 60. In the following, instead of distinguishing the ECUs 607 to ECU 609 from one another, the ECUs 607 to ECU 609 are described as an integrated structure as the vehicle control device 60.

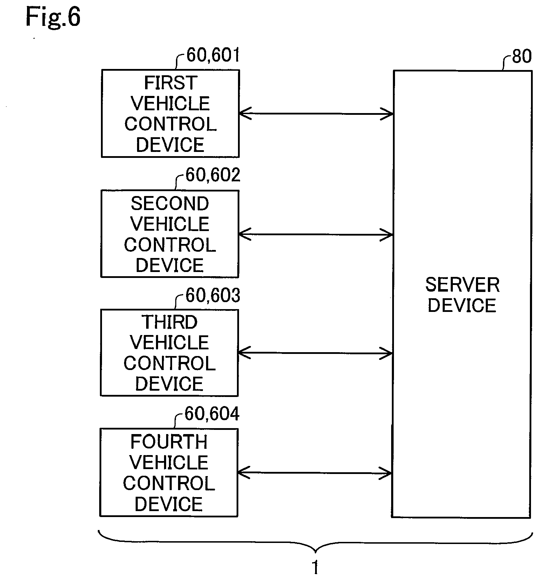

Fig. 6 is a block diagram illustrating a schematic structure of the system 1 in the first embodiment. As mentioned above, the system 1 includes one or more vehicles 100 and the server device 80. Fig. 6 only illustrates the vehicle control device 60 and omits other structures of the vehicle 100. A first vehicle control device 601 is the vehicle control device 60 mounted on the first vehicle 101. A second vehicle control device 602 is the vehicle control device 60 mounted on the second vehicle 102. A third vehicle control device 603 is the vehicle control device 60 mounted on the third vehicle 103. A fourth vehicle control device 604 is the vehicle control device 60 mounted on the fourth vehicle 104. In the following, when it is not necessary to distinguish the respective vehicle control devices 601 to 604 from one another, the vehicle control devices 601 to 604 are simply referred to as a "vehicle control device 60".

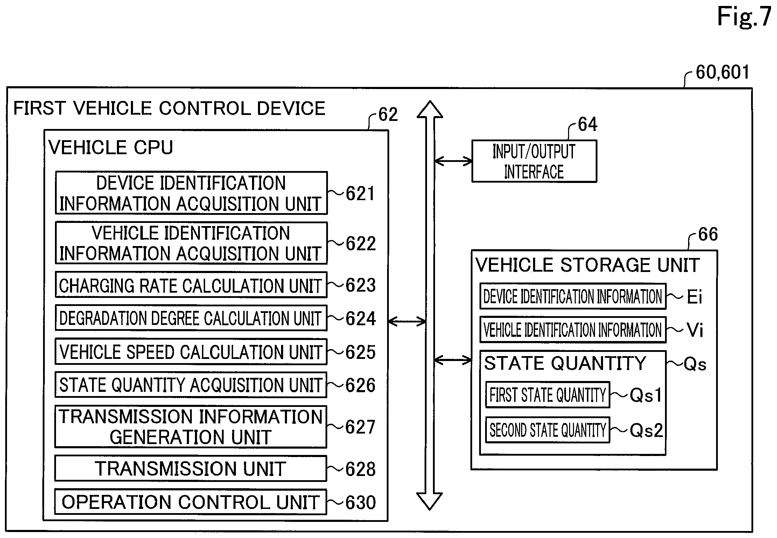

Fig. 7 is a block diagram illustrating a schematic structure of the vehicle control device 60 in the first embodiment. In the present embodiment, the first vehicle control device 601, the second vehicle control device 602, the third vehicle control device 603, and the fourth vehicle control device 604 have identical structures. Therefore, Fig. 7 shows the structure of the first vehicle control device 601, which represents the vehicle control devices 601 to 604 mounted on the plurality of vehicles 101 to 104, respectively. The vehicle control device 60 includes an input/output interface 64 as a communication unit in the vehicle control device 60, a vehicle CPU 62 as a central processing unit in the vehicle control device 60, and a vehicle storage unit 66 as a storage unit in the vehicle control device 60. The input/output interface 64, the vehicle CPU 62, and the vehicle storage unit 66 are connected to one another via an internal bus for bidirectional communication. The input/output interface 64 is connected to a group of actuators and a communication device mounted on the vehicle 100.

The vehicle CPU 62 functions as a device identification information acquisition unit 621, a vehicle identification information acquisition unit 622, a charging rate calculation unit 623, a degradation degree calculation unit 624, and a vehicle speed calculation unit 625 by expanding the various programs stored in the vehicle storage unit 66. Furthermore, the vehicle CPU 62 functions as a state quantity acquisition unit 626, a transmission information generation unit 627, a transmission unit 628, and an operation control unit 630 by expanding the various programs stored in the vehicle storage unit 66.

The device identification information acquisition unit 621 acquires device identification information Ei, which is identification information of the on-vehicle device 2. The device identification information Ei is a device ID (identifier) assigned to each of the on-vehicle devices 2 to individually identify a plurality of types or items of the on-vehicle devices 2 so that there is no overlap among the on-vehicle devices 201 to 204. In the present embodiment, the device identification information Ei is a battery ID (identifier) assigned to each main battery 20 to identify the main battery 20 as the on-vehicle device 2. The device identification information acquisition unit 621 acquires the device identification information Ei recorded on a device identification portion (not shown) in the on-vehicle device 2 by optically reading the device identification portion using a device reading unit (not shown), which is provided in the vehicle 100 in advance, for example, when the on-vehicle device 2 is mounted on the vehicle 100. In this case, the device identification portion is, for example, a one-dimensional code such as a bar code that records the device identification information Ei, or a two-dimensional stacked code or two-dimensional matrix code such as QR code (registered trademark). The device reading unit is a code reader (camera) capable of optically reading the device identification portion. The expression "when the on-vehicle device 2 is mounted on the vehicle 100" means, for example, the time when the device identification portion has reached a position where the device reading unit can optically read the device identification portion. That is, the device identification information acquisition unit 621 does not necessarily need to acquire the device identification information Ei after the timing when the on-vehicle device 2 is mounted on the vehicle 100; the device identification information acquisition unit 621 may acquire the device identification information Ei at a timing before the timing when the on-vehicle device 2 is mounted on the vehicle 100. Further, if the on-vehicle device 2 has a communication function that enables communication with an external device, the device identification information acquisition unit 621 may acquire the device identification information Ei by receiving an identification signal including the device identification information Ei, which is an identification signal from the on-vehicle device 2. Furthermore, the device identification information acquisition unit 621 may acquire the device identification information Ei by accepting input of the device identification information Ei from a user via an input operation unit (not shown), such as a touch panel, mouse, keyboard, or the like that accepts inputs from users. The method for acquiring the device identification information Ei is not limited to that described above. The device identification information acquisition unit 621 stores the acquired device identification information Ei in a storage unit (in the present embodiment, the vehicle storage unit 66).

The vehicle identification information acquisition unit 622 acquires vehicle identification information Vi, which is the identification information of the vehicle 100. The vehicle identification information Vi is a unique vehicle ID (identifier) assigned to each of the vehicles 100 to individually identify the plurality of vehicles 100 shown in Fig. 1 so that there is no overlap among the vehicles 100. The vehicle identification information Vi may include information about the vehicle type and the grade of the vehicle 100, information of its destination such as the receiving end, and the like. The vehicle identification information acquisition unit 622 acquires the vehicle identification information Vi recorded on a vehicle identification portion (not shown) attached to the vehicle 100, for example, by optically reading the vehicle identification portion by a vehicle reading unit (not shown) installed in advance at the first production site FC1 or the like. In this case, the vehicle identification portion is, for example, a one-dimensional code such as a bar code that records the vehicle identification information Vi, or a two-dimensional stacked code or two-dimensional matrix code such as QR code (registered trademark). The vehicle reading unit is a code reader (camera) capable of optically reading the vehicle identification portion. The vehicle identification information acquisition unit 622 may also acquire the vehicle identification information Vi by reading out the vehicle identification information Vi stored in advance in the vehicle storage unit 66. Furthermore, the vehicle identification information acquisition unit 622 may acquire the vehicle identification information Vi by accepting input of the vehicle identification information Vi from a user via an input operation unit (not shown). The method for acquiring the vehicle identification information Vi is not limited to that described above. The vehicle identification information acquisition unit 622 stores the acquired vehicle identification information Vi in a storage unit (in the present embodiment, the vehicle storage unit 66).

The charging rate calculation unit 623 calculates a charging rate (SOC: State of Charge) of the main battery 20. The charging rate calculation unit 623 calculates the charging rate of the main battery 20, for example, by dividing the integrated value of the output current value measured by the current sensor 91 by the rated capacity (fully charged capacity) of the main battery 20. Further, the charging rate calculation unit 623 may calculate the charging rate of the main battery 20, for example, by acquiring data of such as the output voltage value of the main battery 20 measured by the voltage sensor 92 and comparing it with the SOC database (not shown). The SOC database includes, for example, a SOC-OCV curve representing the relationship between the charging rate of the main battery 20 and the open circuit voltage value (OCV) of the main battery 20, temperature characteristic data representing the relationship between the charging rate of the main battery 20 and the temperature of the main battery 20, and the like. Further, the charging rate calculation unit 623 may also calculate the charging rate of the main battery 20 from the time elapsed after the previous charging rate calculation, the running time and the running distance of the vehicle 100, and the like. The method for calculating the charging rate of the main battery 20 is not limited to that described above.

The degradation degree calculation unit 624 calculates the degradation degree (SOH: State Of Health) of the main battery 20. The degradation degree calculation unit 624 acquires, for example, the temperature of the main battery 20 measured by the battery temperature sensor 93, the open circuit voltage of the main battery 20, and the charging rate of the main battery 20 (hereinafter referred to as "battery charging rate") calculated by the charging rate calculation unit 623. The degradation degree calculation unit 624 then calculates an apparent charging rate using, for example, the temperature of the main battery 20 and the open circuit voltage of the main battery 20. Then, the degradation degree calculation unit 624 calculates the degradation degree of the main battery 20 using, for example, the battery charging rate and the apparent charging rate, according to the following formula (1).

$$\text{Degradation degree} = (100 - \text{battery charging rate}) \div (100 - \text{apparent charging rate}) \dots$$

Formula (1)

The vehicle speed calculation unit 625 uses the output value of the wheel speed sensor 94, i.e., the wheel speed of the vehicle 100 measured by the wheel speed sensor 94, to calculate the running speed of the vehicle 100. Specifically, the vehicle speed calculation unit 625 calculates the running speed of the vehicle 100 based on the wheel speed per unit time, for example, after calculations, such as averaging the wheel speed of each wheel, are performed. At least some of the functions of the vehicle speed calculation unit 625 may be performed by the wheel speed sensor 94.

The state quantity acquisition unit 626 acquires one or more kinds of state quantity Qs that indicates the state of the on-vehicle device 2, and that is at least one of a first state quantity Qs1 and a second state quantity Qs2, in association with a timing corresponding to the state quantity Qs. That is, the state quantity acquisition unit 626 acquires one or more kinds of state quantity Qs that indicates the state of the on-vehicle device 2, and that is at least one of a first state quantity Qs1 and a second state quantity Qs2, in association with the acquisition timing. The first state quantity Qs1 is a state quantity Qs before the vehicle 100 runs in an unmanned driving mode. The second state quantity Qs2 is a state quantity Qs during running in an unmanned driving mode between the production site FC1 and the production site FC3 where each production step is performed during the process of manufacturing the vehicle 100. That is, the first state quantity Qs1 and the second state quantity Qs2 are different in acquisition timing. In the present embodiment, the state quantity acquisition unit 626 acquires a plurality of types of state quantity Qs multiple times at different timings for each predetermined time interval. This enables the state quantity acquisition unit 626 to acquire a plurality of types of the first state quantity Qs1 measured or calculated for the first time, and the second state quantity Qs2 measured or calculated at a plurality of different timings, the second state quantity Qs2 being acquired for each timing of the measurement or calculation. The state quantity acquisition unit 626 stores the plurality of types of state quantity Qs acquired at each of the predetermined time intervals in the storage unit (in the present embodiment, the vehicle storage unit 66) for each acquisition timing.

The transmission information generation unit 627 generates information (hereinafter referred to as "transmission information") to be transmitted to the server device 80. The transmission information includes at least the device identification information Ei and the vehicle identification information Vi. Specifically, when the state quantity acquisition unit 626 acquires the state quantity Qs for the first time, the transmission information generation unit 627 generates the transmission information including the device identification information Ei, the vehicle identification information Vi, and the initial value of the state quantity Qs. In the present embodiment, the state quantity acquisition unit 626 acquires the first state quantity Qs1. Therefore, the initial value of the state quantity Qs corresponds to the first state quantity Qs1. When the state quantity acquisition unit 626 acquires the state quantity Qs after the first time, i.e., when the state quantity acquisition unit 626 acquires the state quantity Qs for the second or subsequent times, the transmission information generation unit 627 generates the transmission information that includes identification candidate data and a new state quantity Qs for each acquisition timing. The "identification candidate data" here refers to at least one of the device identification information Ei, the vehicle identification information Vi, and the state quantity Qs of a unique value included in the transmission information generated so far. The "new state quantity Qs" is a state quantity Qs not included in the transmission information generated so far and is newly acquired by the state quantity acquisition unit 626. In the present embodiment, the state quantity acquisition unit 626 acquires the second state quantity Qs2. Therefore, the "new state quantity Qs" is an elapsed-time value of the state quantity Qs that is not included in the transmission information generated so far and corresponds to the second state quantity Qs2 that is newly acquired by the state quantity acquisition unit 626.

The transmission unit 628 transmits various types of information, such as the transmission information, generated by the transmission information generation unit 627 to the server device 80. That is, when the state quantity acquisition unit 626 acquires the state quantity Qs for the first time, the transmission unit 628 transmits at least the device identification information Ei and the vehicle identification information Vi to the server device 80. In the present embodiment, when the state quantity acquisition unit 626 acquires the state quantity Qs for the first time, the transmission unit 628 transmits the first state quantity Qs1, which corresponds to the initial value of the state quantity Qs, to the server device 80, in addition to the device identification information Ei and the vehicle identification information Vi. Further, when the state quantity acquisition unit 626 acquires the state quantity Qs after the first time, i.e., for the second or subsequent times, the transmission unit 628 transmits the identification candidate data and the second state quantity Qs2, which corresponds to the new state quantity Qs. The transmission unit 628 may transmit other information, such as the running speed or the like of the vehicle 100 calculated by the vehicle speed calculation unit 625, to the server device 80. Further, the transmission unit 628 may also transmit information acquired by receiving it from the step management devices 71 and 72 or external devices to the server device 80.

The operation control unit 630 controls a group of actuators to drive the vehicle 100. The operation control unit 630 can make the vehicle 100 run by controlling a group of actuators using the running control signal received from the server device 80. The running control signal is a control signal for driving the vehicle 100. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100. At least some of the functions of the vehicle CPU 62 may be implemented as a function of the server device 80. Further, at least some of the functions of the vehicle CPU 62 may be implemented by a hardware circuit.

The vehicle storage unit 66 stores various information including various programs for controlling the operation of the vehicle 100 and various type of information including the device identification information Ei, the vehicle identification information Vi, and the state quantity Qs of the on-vehicle device 2. The vehicle storage unit 66 includes, for example, RAM, ROM, a hard disk drive (HDD) and the like.

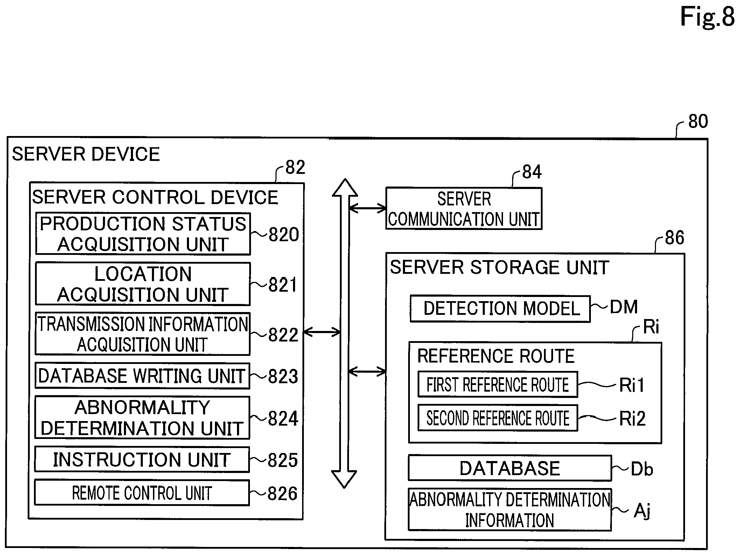

Fig. 8 is a block diagram illustrating a schematic structure of the server device 80 in the first embodiment. The server device 80 includes a server communication unit 84 as the communication unit in the server device 80, a server control device 82 as the central processing unit in the server device 80, and a server storage unit 86 as the storage unit in the server device 80. The server communication unit 84, the server control device 82, and the server storage unit 86 are connected to are connected via an internal bus for bidirectional communication.

The server communication unit 84 communicably connects the server device 80 with other components of the system 1, such as the vehicle control device 60. The server communication unit 84 is, for example, a wireless communication device. The communication method by the server communication unit 84 is not limited to that described above.

The server control device 82 functions as a production status acquisition unit 820, a location acquisition unit 821, a transmission information acquisition unit 822, and a database writing unit 823 by expanding the various programs stored in the server storage unit 86. Furthermore, the server control device 82 functions as an abnormality determination unit 824, an instruction unit 825, and a remote control unit 826 by expanding various programs stored in the server storage unit 86.

The production status acquisition unit 820 acquires production status of each production process in the factory FC. The "production status" here includes, for example, the start timing and the completion timing of the process, the number of in-process products in each production step, the number of vehicles scheduled to be produced per day, the target production time to produce one vehicle 100, the status of delay relative to the target production time, and the like. The "status of delay relative to the target production time" here includes various types of information that can be used to determine whether any delay relative to the normal schedule occurs in the process of the production step. The "status of delay relative to the target production time" includes, for example, presence or absence of a delay relative to the target production time, presence or absence of an abnormality in the production process, presence or absence of execution of emergency stop measures during the production process, and the actual measurement value of the delay time relative to the target production time, and the like. Further, the "status of delay relative to the target production time" may include predicted delay time relative to the target production time, and the like. The production status acquisition unit 820 acquires the production status of the first production step from the first step management device 71 shown in Fig. 1, and also acquires the production status of the second production step from the second step management device 72. It is however not limited to the case where the production status acquisition unit 820 acquires the production status of each production step from the first step management device 71 and the second step management device 72. The production status acquisition unit 820 may also acquire the production status of each production step from a production management system (not shown) that controls each production step in the factory FC in an integrated manner.

The location acquisition unit 821 shown in the Fig.8 acquires the vehicle location information. The vehicle location information is locational information as a basis for generating a running control signal. In the present embodiment, the vehicle location information includes the location and orientation of the vehicle 100 in a reference coordinate system of the factory FC. The location acquisition unit 821 acquires the vehicle location information using the captured image acquired from the external cameras 901-904 as the external sensors.

In details, the location acquisition unit 821 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The outer shape of the vehicle 100 in the captured image may be detected by inputting the captured image to a detection model using artificial intelligence, for example. The detection model is prepared in the system 1 or outside the system 1. The detection model is stored in advance in a memory of the server storage unit 86, for example. The detection model is stored in advance in a memory of the server 200, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The location acquisition unit 821 can acquire the orientation of the vehicle 100 through estimation based on the direction of a motion vector of the vehicle 100 detected from change in location of a feature point of the vehicle 100 between frames of the captured images using optical flow process, for example.

The transmission information acquisition unit 822 acquires at least the device identification information Ei and the vehicle identification information Vi. In the present embodiment, the transmission information acquisition unit 822 acquires the device identification information Ei, the vehicle identification information Vi, and the state quantity Qs by receiving the transmission information transmitted from the vehicle control device 60. In this case, the transmission information acquisition unit 822 acquires a plurality of types of state quantity Qs multiple times at different timings. Specifically, when the state quantity acquisition unit 626 acquires the state quantity Qs for the first time, the transmission information acquisition unit 822 receives the transmission information including the device identification information Ei, the vehicle identification information Vi, and the first state quantity Qs1 corresponding to the initial value of the state quantity Qs from the vehicle control device 60. This enables the transmission information acquisition unit 822 to acquire the device identification information Ei, the vehicle identification information Vi, and the first state quantity Qs as the initial value of the state quantity Qs. When the state quantity acquisition unit 626 acquires the state quantity Qs after the first time, i.e., for the second or subsequent times, the transmission information acquisition unit 822 receives the transmission information including the identification candidate data and the second state quantity Qs2, which corresponds to the new state quantity Qs, from the vehicle control device 60. This enables the transmission information acquisition unit 822 to acquire the identification candidate data and the second state quantity Qs2 corresponding to the new state quantity Qs. The method for acquiring the device identification information Ei, the vehicle identification information Vi, and the state quantity Qs is not limited to that described above. The transmission information acquisition unit 822 may, for example, acquire the device identification information Ei, the vehicle identification information Vi, and the state quantity Qs without involving the vehicle control device 60. In this case, the transmission information acquisition unit 822 may acquire at least one or more of the device identification information Ei, the vehicle identification information Vi, and the state quantity Qs, for example, by accepting input from a user via the input operation unit. The transmission information acquisition unit 822 may also acquire other information transmitted from external devices, such as the vehicle control device 60.

When the transmission information acquisition unit 822 acquires the transmission information for the first time, the database writing unit 823 generates a database and stores it in the storage unit (in this embodiment, the server storage unit 86). The database is an assembly of data in which the device identification information Ei, the vehicle identification information Vi, and the state quantity Qs are associated with each other. When the transmission information acquisition unit 822 acquires the transmission information after the first time, i.e., for the second or subsequent times, the database writing unit 823 reads out the database stored in the storage unit (in the present embodiment, the server storage unit 86). Then the database writing unit 823 updates the database by additionally writing the new state quantity Qs to the database . At this time, the database writing unit 823 detects the same candidate identification data (hereinafter referred to as the same identification data) that are the same as the candidate identification data associated with the new state quantity Qs from among the identification candidate data included in the database read out. Then, the database writing unit 823 records the state quantity Qs for each on-vehicle device 2 of each vehicle 100 in chronological order on the database by associating the new state quantity Qs with the same identification data. That is, the database writing unit 823 creates a database of the transmission information acquired by the transmission information acquisition unit 822.

The abnormality determination unit 824 performs a determination process, which is at least one of an abnormality determination process and an adjustment determination process, using the state quantity Qs acquired by the transmission information acquisition unit 822 and the abnormality determination information Aja stored in advance in the storage unit (in the present embodiment, the server storage unit 86). The abnormality determination process is a process of determining whether the state of the on-vehicle device 2 is a normal state or an abnormal state using the state quantity Qs acquired by the transmission information acquisition unit 822. The adjustment determination process is a process of determining whether or not to recommend maintenance of the on-vehicle device 2 using the state quantity Qs acquired by the transmission information acquisition unit 822. The abnormality determination information a is information that includes a program for executing the abnormality determination process and the adjustment determination process, thresholds used as criteria in the abnormality determination process and the adjustment determination process, and the like.

In at least one of the first case and the second case, the instruction unit 825 provides a route change instruction to change the destination when the vehicle 100 runs in an unmanned driving mode from the second production site FC2 as the predetermined target location shown in Fig. 1 to the maintenance site FC3, which is different from the target location.

The remote control unit 826 shown in Figure 8 generates and transmits the running control signal to the vehicle 100. In details, the remote control unit 826 determines a target location to which the vehicle 100 is to move next. In the present embodiment, the target location is expressed by X, Y, and Z coordinates in the global coordinate system. The server storage unit 86 contains a reference route Ri stored in advance as a route along which the vehicle 100 is to run. The route is expressed by a node indicating a departure place, a node indicating a way point, a node indicating a destination, and a link connecting nodes to each other. The server 200 determines the target location to which the vehicle 100 is to move next using the vehicle location information and the reference route. The remote control unit 826 determines the target location on the reference route Ri ahead of a current location of the vehicle 100.

Next, the remote control unit 826 generates a running control signal for causing the vehicle 100 to run toward the determined target location. The remote control unit 826 calculates a running speed of the vehicle 100 from transition of the location of the vehicle 100 and makes comparison between the calculated running speed and a target speed of the vehicle 100 determined in advance. If the running speed is lower than the target speed, the remote control unit 826 generally determines an acceleration in such a manner as to accelerate the vehicle 100. If the running speed is higher than the target speed as, the remote control unit 826 generally determines an acceleration in such a manner as to decelerate the vehicle 100. If the vehicle 100 is on the reference route Ri, the remote control unit 826 determines a steering angle and an acceleration in such a manner as to prevent the vehicle 100 from deviating from the reference route. If the vehicle 100 is not on the reference route, in other words, if the vehicle 100 deviates from the reference route, the remote control unit 826 determines a steering angle and an acceleration in such a manner as to return the vehicle 100 to the reference route Ri.

The remote control unit 826 transmits the generated running control signal to the vehicle 100. The remote control unit 826 repeats the acquisition of vehicle location information, the determination of a target location, the generation of a running control signal, the transmission of the running control signal, and others in a predetermined cycle. At least some of the functions of the server control device 82 may be implemented as a function of the vehicle CPU 62. Further, at least some of the functions of the server device 80 may be implemented by a hardware circuit.

The server storage unit 86 stores various items of information including various programs for controlling the operation of the server device 80, the detection model DM, reference route Ri, the database , and the abnormality determination information am. The server storage unit 86 includes, for example, RAM, ROM, a hard disk drive (HDD) and the like. In the present embodiment, the reference route Ri includes a first reference route Ri1 and a second reference route Ri2. As mentioned above, the first reference route Ri1 is the reference route Ri for running the vehicle 100 from the first production site FC1 to the second production site FC2. The second reference route Ri2 is a reference route Ri for running the vehicle 100 from the first production site FC1 to the maintenance site FC3.

A-2. Running Control Method for Vehicle:

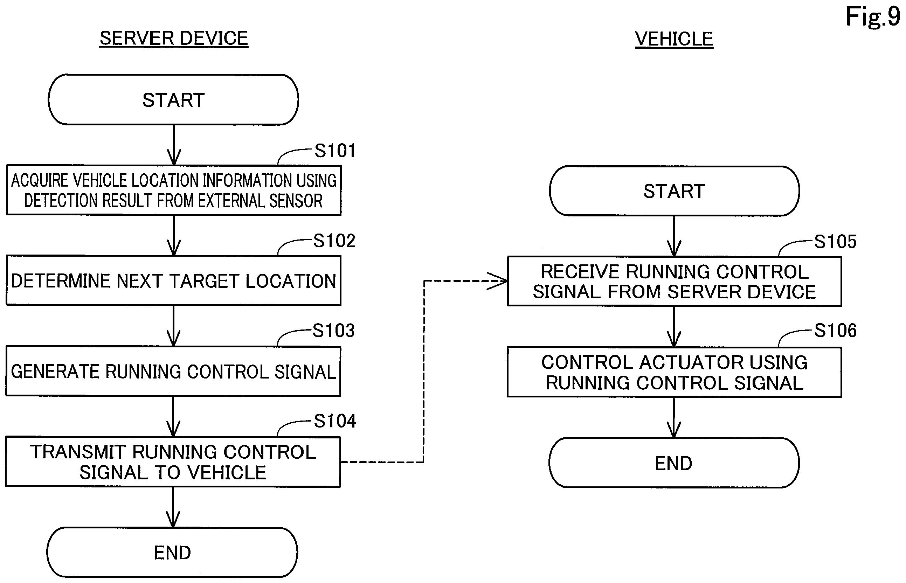

Fig. 9 is a flowchart showing a processing procedure for running control of the vehicle 100 in the first embodiment. The flow shown in Fig. 9 is repeated, for example, every predetermined time from the point at which the vehicle 100 starts running in the second driving mode.

In step S101, the location acquisition unit 821 of the server device 80 acquires vehicle location information using the captured image as detection result output from external sensors 901 to 904. In step S102, the remote control unit 826 determines a target location to which the vehicle 100 is to move next by using vehicle location information and the reference route Ri. In step S103, the remote control unit 826 generates a running control signal for causing the vehicle 100 to run toward the determined target location. In step S104, the remote control unit 826 transmits the generated running control signal to the vehicle 100.

In step S105, the vehicle control device 60 mounted on the vehicle 100 receives the running control signal transmitted from the server device 80. In step S106, the operation control unit 630 of the vehicle control device 60 controls an actuator of the vehicle 100 using the received running control signal, thereby causing the vehicle 100 to run at the acceleration and the steering angle indicated by the running control signal. The vehicle control device 60 repeats the reception of a running control signal and the control over the actuator in a predetermined cycle. According to the system 1 in the present embodiment, it becomes possible to move the vehicle 100 without using a transport unit such as a crane or a conveyor.

A-3. Methods Of Managing On-vehicle Device:

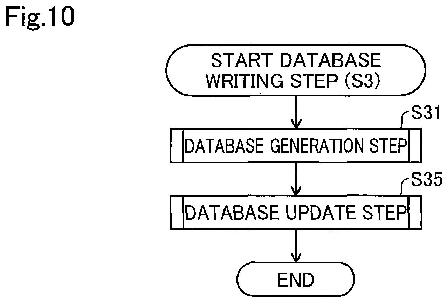

Fig.10 is a flowchart illustrating details of a database writing step (step S3) according to the first embodiment. The database writing step (step S3) is a process of updating the database after the database is generated. In the database writing step (step S3), the database generation step (step S31) and the database update step (step S35) are performed in this order.

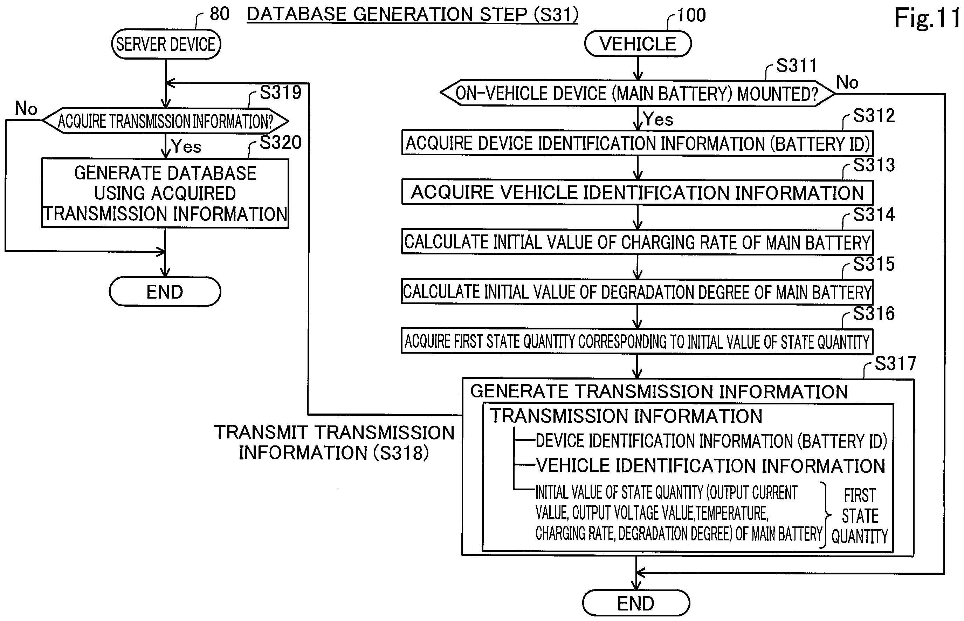

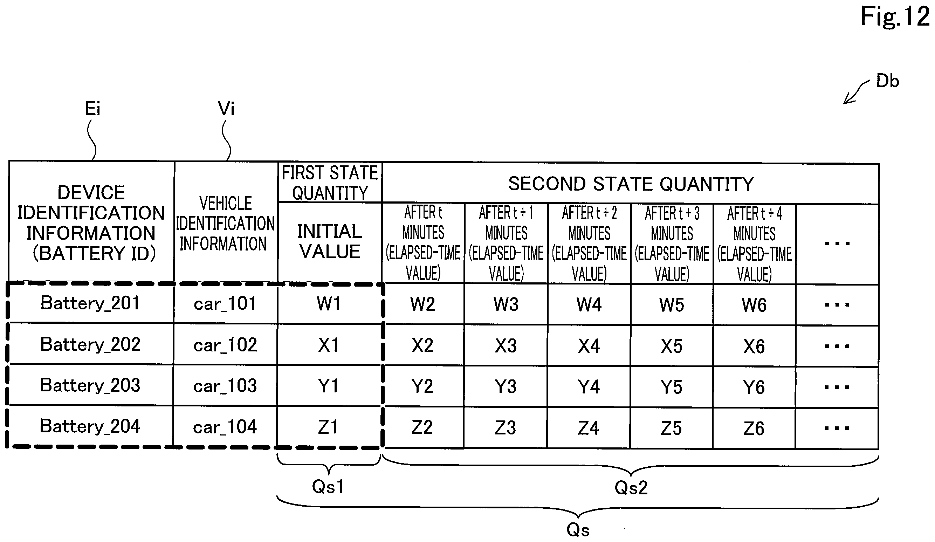

Fig. 11 is a flowchart illustrating details of a database generation step (step S31) according to the first embodiment. Fig. 12 is a schematic diagram illustrating an example of the database . In Fig. 12, from among the plurality of types of state quantity Qs, only one type of state quantity Qs is illustrated, while the other types of state quantity Qs are omitted.

As shown in Fig. 11, when the main battery 20 as the on-vehicle device 2 is mounted on the vehicle 100 (step S311: Yes), the device identification information acquisition unit 621 of the vehicle control device 60 acquires battery ID as the device identification information Ei (step S312). The vehicle identification information acquisition unit 622 acquires the vehicle identification information Vi (step S313). The charging rate calculation unit 623 calculates an initial value of the charging rate of the main battery 20 (step S314). The degradation degree calculation unit 624 calculates an initial value of the degradation degree of the main battery 20 (step S315). Among the steps from the step S312 to the step S315, any step may be performed first. After each step to the step S315 is performed, the state quantity acquisition unit 626 acquires the first state quantity Qs1 corresponding to the initial value of the state quantity Qs (step S316). In the present embodiment, the state quantity Qs is a state quantity Qs indicating the state of the main battery 20, including the output current value, output voltage value, temperature, charging rate, and the degradation degree of the main battery 20. That is, the state quantity acquisition unit 626 acquires the measurement values of the current sensor 91, the voltage sensor 92, and the battery temperature sensor 93, the charging rate calculated by the charging rate calculation unit 623, and the degradation degree calculated by the degradation degree calculation unit 624 as the first state quantity Qs1 corresponding to the initial value of the state quantity Qs. After the step S316, the transmission information generation unit 627 generates the transmission information (step S317). In the present embodiment, in the step S317, the transmission information generation unit 627 generates the transmission information in which the device identification information Ei, the vehicle identification information Vi, and the output current value, output voltage value, temperature, charging rate, and the degradation degree of the main battery 20 as the first state quantity Qs1 are associated with each other. After the step S317, the transmission unit 628 transmits the transmission information generated by transmission information generation unit 627 in the step S317 to the server device 80 (step S318).

When the transmission information acquisition unit 822 of the server control device 82 receives and acquires the transmission information (step S319: Yes), the database writing unit 823 generates the database as shown by the dotted line in Fig. 12 using the acquired transmission information (step S320).

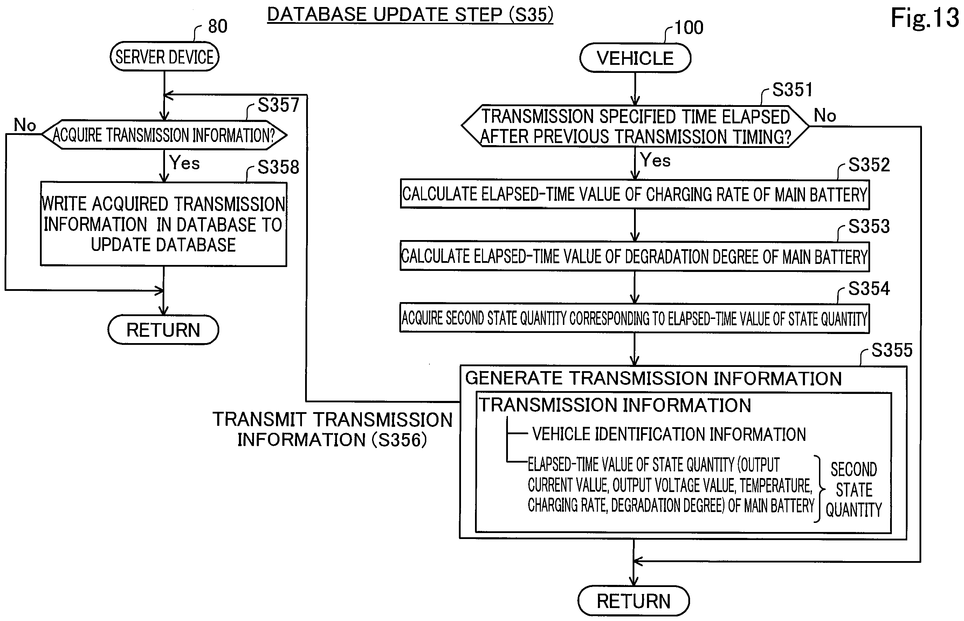

Fig. 13 is a flowchart illustrating details of the database update step (step S35) according to the first embodiment. If it is the timing where the transmission unit 628 has sent the transmission information to the server device 80, and also a predetermined time has passed after the previous transmission timing (step S351), each step from the step S352 onward is performed. The charging rate calculation unit 623 calculates the current value (elapsed-time value) of the charging rate of the main battery 20 (step S352). The degradation degree calculation unit 624 calculates the current value (elapsed-time value) of the degradation degree of the main battery 20 (step S353). Any of the step S352 and the step S353 may be performed first. After each step to the step S353 is performed, the state quantity acquisition unit 626 acquires the second state quantity Qs2 corresponding to the elapsed-time value of the state quantity Qs (step S354). After the step S354, the transmission information generation unit 627 generates new transmission information (step S355), which is different from the transmission information transmitted at the previous transmission timing. In the present embodiment, in the step S355, the transmission information generation unit 627 generates the transmission information in which the vehicle identification information Vi, and the output current value, output voltage value, temperature, charging rate, and the degradation degree of the main battery 20 as the second state quantity Qs2 are associated with each other. After the step S355, the transmission unit 628 transmits the transmission information generated by the transmission information generation unit 627 in the step S355 to the server device 80 (step S356).

In the case where the transmission information acquisition unit 822 of the server control device 82 receives and acquires the transmission information (step S357: Yes), the step S358 is performed. As shown in Fig. 13, the database writing unit 823 updates the database by writing a new state quantity Qs to the database using the acquired transmission information (step S358). When the step S358 is completed, the process returns to the step S351, and each step from the step S351 to the step S358 is performed repeatedly.

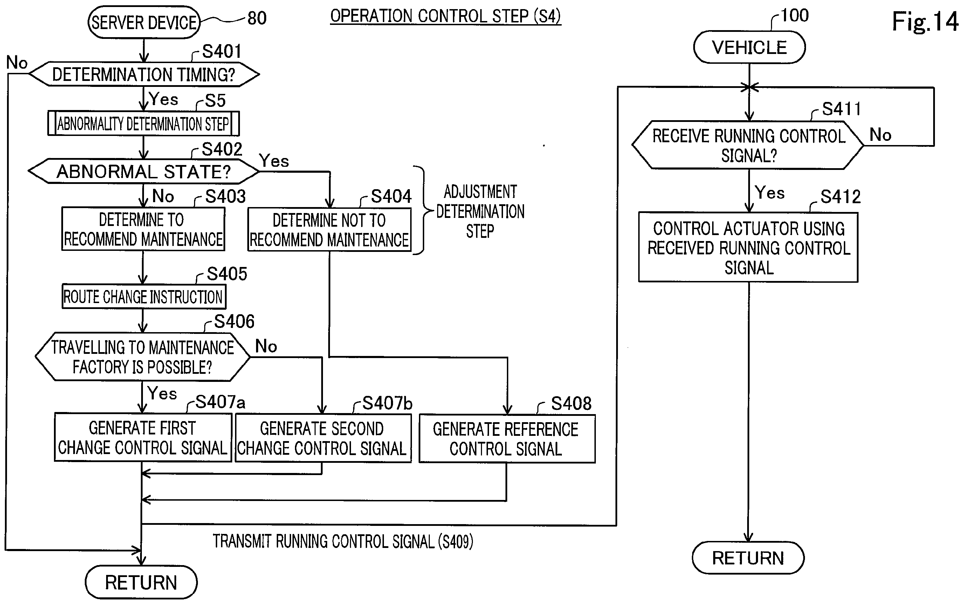

Fig. 14 is a flowchart illustrating details of an operation control step (step S4) for the vehicle 100 using the database . The operation control step (step S4) is a step of controlling the operation of the vehicle 100 that is running in the second driving mode, according to the state of the on-vehicle device 2.

In the operation control step, the abnormality determination unit 824 first performs an abnormality determination step (step S5) when the predetermined determination timing comes (step S401: Yes). The abnormality determination step (step S5) is a step of performing an abnormality determination process that determines whether the state of the on-vehicle device 2 is a normal state or an abnormal state using the state quantity Qs acquired by the state quantity acquisition unit 626. The determination timing is, for example, the timing when a predetermined production step has started, or the timing when a predetermined time has passed after the previous determination timing. Further, the determination timing may be, for example, the timing when the count of the state quantity Qs, which is each type of the state quantity Qs included in the database and which is the state quantity Qs acquired multiple times at different timings for each on-vehicle device 2 of each vehicle 100, becomes equal to or greater than a predetermined count threshold. The determination timing is not limited to this. The abnormality determination unit 824 may continuously perform the abnormality determination step (step S5) at all times. Further, the abnormality determination unit 824 may determine the state of the on-vehicle device 2 using one type of the state quantity Qs or determine the state of the on-vehicle device 2 comprehensively using a plurality of types of state quantity Qs.

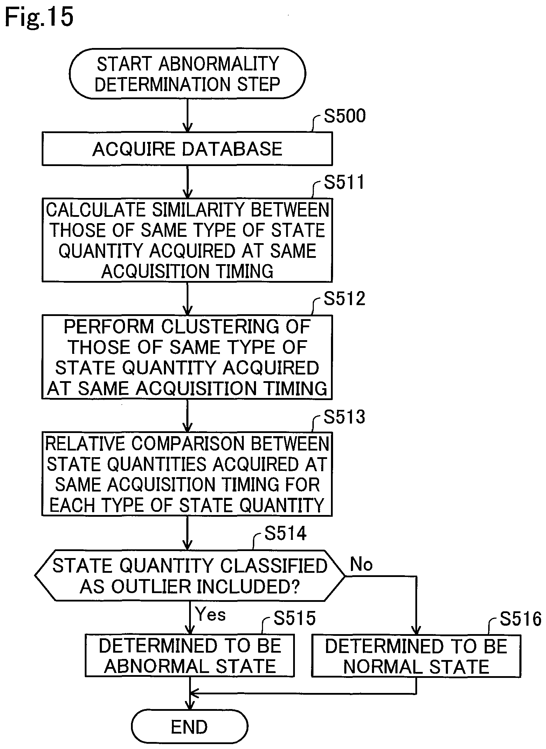

Fig. 15 is a flowchart illustrating details of the abnormality determination step according to the first embodiment. In the present embodiment, as shown in Fig. 1, a plurality of vehicles 100 are running between the production sites FC1 to FC3. Therefore, the abnormality determination unit 824 performs an abnormality determination process by way of relative comparison of the state quantity Qs acquired for each of the plurality of vehicles 100 using the database . More specifically, the abnormality determination unit 824 performs the abnormality determination process by relative comparison of at least the state quantity Qs acquired from the target vehicle, which is one of the plurality of vehicles 100, and the state quantity Qs acquired from an adjacent vehicle, which is the vehicle 100 running either before or after the target vehicle. When a plurality of on-vehicle devices 2 are targeted for the management with respect to a single vehicle 100, the abnormality determination unit 824 performs each step from the step S511 to the step S516 for each on-vehicle device 2.

In the abnormality determination step (step S5), the abnormality determination unit 824 first acquires the database stored in the storage unit (in the present embodiment, the server storage unit 86) (step S500).

After the step S500, the abnormality determination unit 824 calculates the similarity between those of the same type of state quantity Qs acquired at the same acquisition timing for each of the plurality of vehicles 100 (step S511), thereby performing clustering of the state quantity Qs (step S512). For example, the abnormality determination unit 824 performs clustering of those of the state quantity Qs of the same type acquired at the same acquisition timing for each of the plurality of vehicles 100 using a first machine learning model, which has been trained to perform clustering of plural items of numerical data based on their similarity. The first machine learning model may be prepared by using various clustering algorithms. The clustering algorithm used for the first machine learning model is, for example, the k-means algorithm, the k-medoids algorithm.

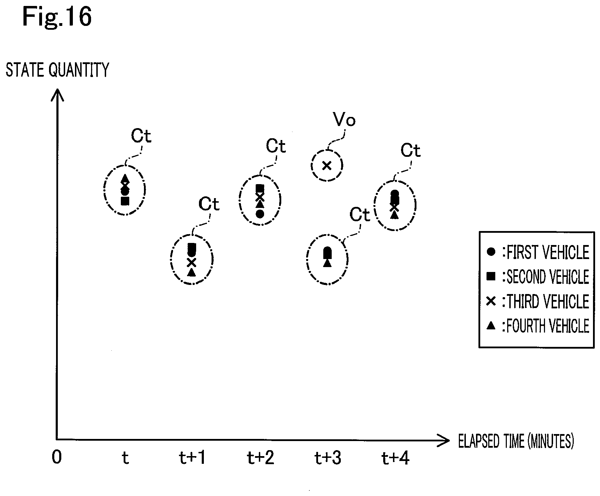

Fig. 16 is a conceptual diagram illustrating an example of a clustering method for state quantity Qs acquired for each of the plurality of vehicles 100. Fig. 16 illustrates one type of state quantity Qs acquired for each of the four vehicles 101 to 104 shown in Fig. 1, at each acquisition timing. The horizontal axis in Fig. 16 represents the time elapsed since the acquisition timing of the initial value of the state quantity Qs. The vertical axis in Fig. 16 represents the value of the state quantity Qs.

For example, the abnormality determination unit 824 calculates the similarity between those of the same type of state quantity Qs acquired at the same acquisition timing for each of the plurality of vehicles 100 (step S511). The similarity corresponds to, for example, the distance between the state quantities Qs to be clustered. In this case, the abnormality determination unit 824 calculates the similarity, for example, by calculating the Mahalanobis distance between those of the same type of state quantity Qs acquired at the same acquisition timing for each of the plurality of vehicles 100, with respect to all of the state quantities Qs in the database . Then, the abnormality determination unit 824 performs clustering of those of the same type of state quantity Qs acquired at the same acquisition timing for each of the plurality of vehicles 100 using the calculated similarity (step S512). Specifically, for example, the abnormality determination unit 824 classifies the state quantity Qs with a similarity less than a predetermined first similarity threshold at the same acquisition timing into a normal cluster Cs. Further, for example, the abnormality determination unit 824 classifies the state quantity Qs with a similarity equal to or more than the first similarity threshold at the same acquisition timing as an outlier Vo that is not included in the normal cluster Cs. In the present embodiment, the state quantity Qs that is acquired from the third on-vehicle device 203 mounted on the third vehicle 103 and that is acquired at the timing when the elapsed time since the acquisition timing of the initial value is t+3 minutes later is classified as the outlier Vo. The state quantities Qs other than the above state quantities Qs classified into the outlier Vo are classified into the normal cluster Cs. The clustering method and the algorithm for the state quantity Qs are not limited to those shown above.

As shown in Fig. 15, after the step S512, the abnormality determination unit 824 performs relative comparison between those of the state quantity Qs acquired at the same acquisition timing for each of the plurality of vehicles 100, based on the type of the state quantity Qs (step S513). Then, the abnormality determination unit 824 refers to the database to identify the vehicle identification information Vi and the device identification information Ei of the vehicle 103 from which the state quantity Qs classified as the outlier Vo is acquired. This enables the abnormality determination unit 824 to determine that the on-vehicle device 203 mounted on the vehicle 103, from which the state quantity Qs classified as the outlier Vo is acquired, is in an abnormal state (step S514: Yes, step S515). In the meantime, the abnormality determination unit 824 refers to the database to identify the vehicle identification information Vi and the device identification information Ei of the vehicles 101, 102 and 104 other than the vehicle 103 determined to be in an abnormal state. This enables the abnormality determination unit 824 to determine that the on-vehicle devices 201, 202, and 204 mounted on the vehicles 101, 102, and 104, from which the state quantities Qs classified only into the normal cluster Cs are acquired, are in a normal state (step S514: No, step S516). In the present embodiment, the third on-vehicle device 203 mounted on the third vehicle 103 is determined to be in an abnormal state. Further, the first on-vehicle device 201 mounted on the first vehicle 101, the second on-vehicle device 202 mounted on the second vehicle 102, and the fourth on-vehicle device 204 mounted on the fourth vehicle 104 are all determined to be in a normal state.

As shown in Fig. 14, the abnormality determination unit 824 performs an adjustment determination step (steps S402 to S404) after the abnormality determination step (step S5). The adjustment determination step (steps S402 to S404) is a step of performing an adjustment determination process that determines whether or not to recommend the maintenance of the on-vehicle device 2. If the on-vehicle device 2 is determined to be in an abnormal state (step S402: Yes) in the abnormality determination step (step S5), the abnormality determination unit 824 determines to recommend the maintenance of the on-vehicle device 2 mounted on the vehicle 100 (step S403). On the other hand, if the on-vehicle device 2 is determined to be in a normal state (step S402: No) in the abnormality determination step (step S5), the abnormality determination unit 824 determines not to recommend the maintenance of the on-vehicle device 2 mounted on the vehicle 100 (step S404). In the present embodiment, in the adjustment determination step, it is determined to recommend the maintenance of the third on-vehicle device 203. In addition, it is determined not to recommend the maintenance of the first on-vehicle device 201, the second on-vehicle device 202, and the fourth on-vehicle device 204, i.e., the necessity of maintenance for those on-vehicle devices is determined to be low.

If it is determined to recommend the maintenance of the on-vehicle device 2, the step S405 is performed. Specifically, the instruction unit 825 provides a route change instruction to change the destination of the vehicle 100 running in the unmanned driving mode from the second production site FC2 to the maintenance site FC3 (step S405). In other words, when it is determined to recommend the maintenance of the on-vehicle device 2, the instruction unit 825 instructs the remote control unit 826 to change the reference route Ri to be used when generating the running control signal from the first reference route Ri1 to the second reference route Ri2.

When a route change instruction is received, the remote control unit 826 determines whether the vehicle 100 can run from the current location to the maintenance site FC3 by the second driving mode (step S406). In other words, when a route change instruction is received, the remote control unit 826 determines whether or not it is possible to continue running in the second driving mode. Specifically, the remote control unit 826 determines, for example, whether or not the state quantity Qs included in the database , which is classified as an outlier Vo by cluster analysis, is within the predetermined allowable range to determine whether or not the driving in the second driving mode can be continued.

For example, when the type of the state quantity Qs classified as the outlier Vo is the temperature of the main battery 20, the remote control unit 826 determines as follows. In this case, if the temperature of the main battery 20 is within the permissible range, it is the case where the temperature of the main battery 20 is less than a predetermined threshold (hereinafter referred to as an upper limit temperature threshold). Further, if the temperature of the main battery 20 falls out of the permissible range, it is the case where the temperature of the main battery 20 is equal to or more than the upper limit temperature threshold. The upper limit temperature threshold is, for example, an upper limit temperature at which a decrease in performance or failure of the main battery 20 can be prevented. In the present embodiment, the remote control unit 826 determines that the running in the second driving mode can be continued if the state quantity Qs classified as the outlier Vo is less than the upper limit temperature threshold (step S406: Yes). On the other hand, the remote control unit 826 determines that the running in the second driving mode cannot be continued if the state quantity Qs classified as the outlier Vo is equal to or more than the upper limit temperature threshold (step S406: No).

Further, for example, when the running in the second driving mode is performed only by an EV running mode, and when the type of the state quantity Qs classified as the outlier Vo is the charging rate of the main battery 20, the remote control unit 826 determines as follows. In this case, if the charging rate of the main battery 20 is within the permissible range, it is the case where the temperature of the main battery 20 is equal to or more than a predetermined threshold (hereinafter referred to as a lower limit charging threshold). Further, if the charging rate of the main battery 20 falls out of the permissible range, it is the case where the charging rate of the main battery 20 is less than the lower limit charging threshold. The lower limit charging threshold is determined, for example, based on the distance to the maintenance site FC3 and the amount of electric power required per unit distance from the vehicle 100 during continuous driving. If the state quantity Qs classified as the outlier Vo is equal to or more than the lower limit charging threshold, it is unlikely that the amount of electric power that can be supplied from the main battery 20 falls below the amount of electric power required from the vehicle 100, even if the vehicle continues running in the second driving mode to the maintenance site FC3. That is, in this case, it is unlikely that the charging rate of the main battery 20 falls excessively low so that the supply of the electric power from the main battery 20 to the driving motor 33 stops, causing the vehicle 100 to stop at an unintended location. Therefore, if the state quantity Qs classified as the outlier Vo is equal to or more than the lower limit charging threshold, the remote control unit 826 determines that the running in the second driving mode can be continued (step S406: Yes). On the other hand, if the state quantity Qs classified as the outlier Vo is less than the lower limit charging threshold, the amount of electric power that can be supplied from the main battery 20 may fall below the amount of electric power required from the vehicle 100 during the running towards the maintenance site FC3. That is, in this case, it is possible that the charging rate of the main battery 20 falls excessively low so that the supply of the electric power from the main battery 20 to the driving motor 33 stops, causing the vehicle 100 to stop at an unintended location. Therefore, if the state quantity Qs classified as the outlier Vo is less than the lower limit charging threshold, the remote control unit 826 determines that the running in the second driving mode cannot be continued (step S406: No). The method for determining whether or not the running in the second driving mode can be continued is not limited to the method above.

When it is determined that the vehicle 100 can run from the current location to the maintenance site FC3 by the second driving mode (step S406: Yes), the remote control unit 826 generates a first change control signal (step S407a). The first change control signal is a driving control value for allowing the vehicle 100 to run from the current location to the maintenance site FC3 by the second driving mode. The first change control signal is generated using the vehicle location information and the second reference route Ri2. On the other hand, if it is determined that the vehicle 100 cannot run from the current location to the maintenance site FC3 by the second driving mode (step S406: No), the remote control unit 826 generates a second change control signal (step S407b). The second change control signal is a running control signal to stop driving the vehicle 100 and make the vehicle 100 to wait at a predetermined standby location. The standby location is, for example, located in the vicinity of the current location of the vehicle 100 at the timing when the step S407b is performed, and is located within a side road that is branched from the tracks R1 to R4. This enables the target vehicle 100 for which the route change instruction was given to stop without interfering with the running of the vehicle 100 that is running in the second driving mode. The standby location is not limited to that described above. The standby location may be, for example, the current location of the vehicle 100 at the timing when the step S407b is performed.

If it is determined that maintenance of the on-vehicle device 2 is not recommended, the remote control unit 826 generates a reference control signal (step S408). The reference control signal is a driving control signal for running the vehicle 100 from the current location to the second manufacturing location FC2 by the second driving mode. The reference control signal is generated using the vehicle location information and the first reference route Ri1.

After the steps S407a, S407b and S408, the remote control unit 826 transmits the running control signal to the vehicle control device 60 (step S409).

When the vehicle 100 receives a running control signal of either the first change control signal, the second change control signal, or the reference control signal (step S411: Yes), the operation control unit 630 of the vehicle control device 60 performs the following process. In this case, the operation control unit 630 controls a group of actuators using the received running control signal to make the vehicle 100 run at the acceleration and steering angle represented in the running control signal (step S412). This allows the vehicle 100 to change its destination to the maintenance site FC3 and continue running when it is determined that maintenance of the on-vehicle device 2 is recommended and it is possible to continue running from the current location to the maintenance site FC3 by unmanned driving. When it is determined that maintenance of the on-vehicle device 2 is recommended, and when it is determined that it is not possible to continue unmanned driving from the current location to the maintenance site FC3, the destination of the vehicle 100 can be changed to a standby location and the vehicle 100 can be stopped at the standby location. When the standby location is the current location of the vehicle 100, the operation control unit 630 promptly stops driving the vehicle 100 and makes the vehicle 100 to wait at that location. The operation control unit 630 may stop the vehicle 100 in place without moving it to the waiting location. When it is determined that maintenance of the on-vehicle device 2 is not recommended, the vehicle 100 may be run to the second manufacturing site FC2 without changing the destination of the vehicle 100.

According to the first embodiment described above, as shown in Fig. 1, the vehicle 100 can run between the production sites FC1 to FC3 in an unmanned driving mode, which enables running by remote control from the server device 80 without a human being getting on the vehicle 100 or using operating members, such as a steering wheel, an accelerator, or the like. Then, as shown in Fig. 11, the vehicle 100 can generate the transmission information including the device identification information Ei and the vehicle identification information Vi, and transmit the transmission information to the server device 80. Further, the server device 80 can acquire the transmission information and store the database in which the device identification information Ei and the vehicle identification information Vi contained in the acquired transmission information are associated with each other. This allows appropriate management as to which of the vehicles 100 capable of running in the second driving mode is equipped with the on-vehicle device 2.

Further, according to the first embodiment described above, as shown in Fig. 13, the vehicle 100 can acquire the state quantity Qs, which indicates the state of the on-vehicle device 2. Then, the vehicle 100 can generate the transmission information that includes the state quantity Qs in addition to the device identification information Ei and the vehicle identification information Vi, and transmit the transmission information to the server device 80. Further, the server device 80 can acquire the transmission information and store the database in which the device identification information Ei, the vehicle identification information Vi, and the state quantity Qs contained in the acquired transmission information are associated with each other. This enables management of the state of the on-vehicle device 2 mounted on the vehicle 100 that is capable of running by the second driving mode.

Further, according to the first embodiment described above, the on-vehicle device 2 to be managed is the main battery 20. In this case, it is possible to properly manage which of the vehicle 100 capable of running by the second driving mode is equipped with the main battery 20, and also manage the state of the main battery 20.

Further, according to the first embodiment described above, the vehicle 100 can acquire at least one of the first state quantity Qs1 and the second state quantity Qs2. This makes it possible to clarify which timing the state quantity Qs is at when the state of the on-vehicle device 2 is managed using the server device 80.

Further, according to the first embodiment described above, when the vehicle 100 is running between the production sites FC1 to FC3 by the second driving mode, the vehicle 100 can acquire the state quantity Qs. This allows the vehicle 100 to confirm the operation of the on-vehicle device 2 while running in the second driving mode. That is, the vehicle 100 can, for example, inspect the quality of the on-vehicle device 2 while running in the second driving mode.

Further, according to the first embodiment described above, as shown in Fig. 14 and Fig. 15, the server device 80 can perform a determination process, which is at least one of the abnormality determination process and the adjustment determination process, using the state quantity Qs acquired from the vehicle 100. This allows the server device 80 to determine whether the state of the on-vehicle device 2 is a normal state or an abnormal state by performing the abnormality determination process. Further, by performing the adjustment determination process, the server device 80 can determine whether or not to recommend the maintenance of the on-vehicle device 2.

Further, according to the first embodiment described above, as shown in Fig. 15, the server device 80 can perform the determination process by relative comparison of the state quantity Qs acquired for each of the plurality of vehicles 100 running between the production sites FC1 to FC3. In this way, for example, it is possible to determine the state of the on-vehicle device 2 or the necessity of the maintenance when it is difficult to perform classification by a uniform threshold value (reference value) due to various properties, such as changes in the state quantity Qs depending on the elapsed time, even if the state of the on-vehicle device 2 is a normal state.

Further, according to the first embodiment described above, as shown in Fig. 1 and Fig. 16, the server device 80 can perform the determination process by relative comparison between at least the state quantity Qs acquired from the target vehicle and the state quantity Qs acquired from an adjacent vehicle. In this way, for example, it is possible to more accurately determine the state of the on-vehicle device 2 or the necessity of the maintenance in the case where the state quantity Qs of the target vehicle and the state quantity Qs of the adjacent vehicle are likely to have similar tendency. The "case where the state quantity Qs of the target vehicle and the state quantity Qs of the adjacent vehicle are likely to have similar tendency" is, for example, the case in which the target vehicle and the adjacent vehicle have the same vehicle type, grade, receiving end, and the like.

Further, according to the first embodiment described above, as shown in Fig. 16, the server device 80 can perform the determination process by performing clustering of those of the same type of state quantity Qs acquired at the same acquisition timing for each of the plurality of vehicles 100 and extracting outliers that are not included in the cluster. This clarifies the grounds in the determination process. Thus, for example, when the state of the on-vehicle device 2 is determined to be an abnormal state, by extracting the state quantity Qs classified as an outlier Vo, it is possible to easily identify the cause of the abnormality that occurred in the on-vehicle device 2, thereby preventing a decrease in production efficiency and quality.

Further, according to the first embodiment described above, the server device 80 can perform the abnormality determination process and the adjustment determination process while the vehicle 100 is running between the production sites FC1 to FC3 by the second driving mode. This allows for confirmation of the state of the on-vehicle device 2 or the necessity of the maintenance of the on-vehicle device 2 during the running in an unmanned driving mode.

Further, according to the first embodiment described above, as shown in Fig. 1 and Fig. 14, in at least one of the first case and the second case, the server device 80 can provide an instruction to change the destination of the vehicle 100 running in the second driving mode to the maintenance site FC3. The first case here is the case where it is determined in the abnormality determination process that the on-vehicle device 2 is in an abnormal state. The second case is the case where it is determined to recommend the maintenance of the on-vehicle device 2 in the adjustment determination process. This allows the vehicle 100 to run in the unmanned driving mode to the maintenance site FC3 where the on-vehicle device 2 is repaired or replaced in the case where the on-vehicle device 2 is in an abnormal state or in the case where maintenance of the on-vehicle device 2 is recommended.

Further, according to the first embodiment described above, the server device 80 can provide a route change instruction to the vehicle 100 while the vehicle 100 is running between the production sites FC1 to FC3 in the second driving mode. Therefore, if an abnormality or necessity of maintenance is detected in the on-vehicle device 2, the vehicle 100 can change its destination according to the situation during the running in the second driving mode.

Further, according to the first embodiment described above, as shown in Fig. 1 and Fig. 6, the system 1 can properly manage which of the on-vehicle devices 201 to 204 are mounted on the respective vehicles 101 to 104 when a plurality of vehicles 101 to 104 run by the second driving mode. Further, the system 1 can also manage the states of the plurality of on-vehicle devices 2 in association with the vehicles 101 to 104, respectively, when the plurality of vehicles 101 to 104 run by the unmanned driving mode.

B. Second Embodiment

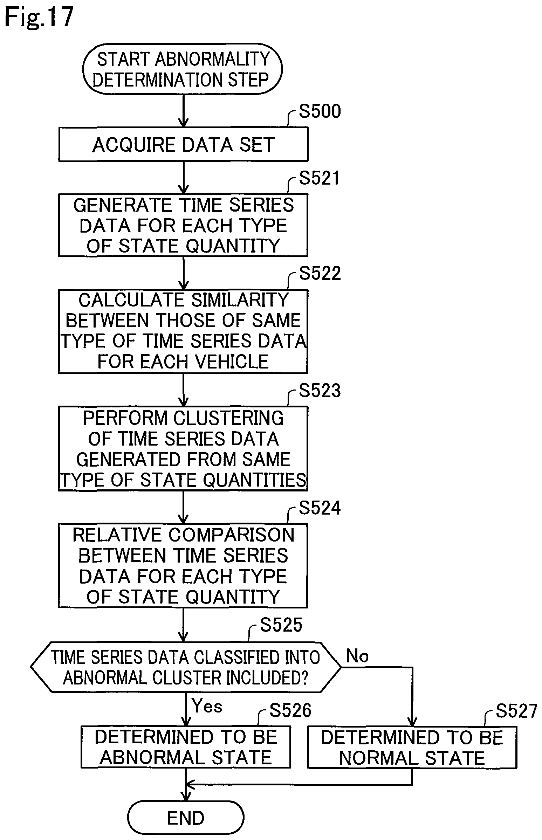

Fig. 17 is a flowchart illustrating details of the abnormality determination step according to a second embodiment. In the present embodiment, a part of the contents of the abnormality determination step differs from that in the first embodiment shown in the Fig. 15 and Fig. 16. Specifically, the abnormality determination unit 824 performs an abnormality determination process by performing relative comparison of time series data that represent time series changes in the state quantity Qs and that are acquired for each of the plurality of the vehicles 100, using the database . Other configurations are the same as those in the first embodiment. The same step and the same configuration as those in the first embodiment are given the same symbols and the explanations thereof are omitted. When a plurality of on-vehicle devices 2 are targeted for the management with respect to a single vehicle 100, the abnormality determination unit 824 performs each step from the step S521 to the step S527 for each on-vehicle device 2.

As shown in Fig. 17, after the step S500, the abnormality determination unit 824 generates time series data for each type of the state quantity Qs (step S521). Specifically, the abnormality determination unit 824 arranges those of the same type of state quantity Qs acquired for each of the plurality of vehicles 100 in chronological order. In this way, the abnormality determination unit 824 generates time series data that represent time series changes in those of the same type of state quantity Qs acquired for each of the plurality of vehicles 100.

After the step S521, the abnormality determination unit 824 calculates the similarity between the time series data of the respective vehicles 100 (step S522) and performs clustering of the time series data for each type of the state quantity Qs (step S523). For example, the abnormality determination unit 824 performs clustering of the time series data G1 to G4 of the respective vehicles 100 based on the type of the state quantity Qs using a second machine learning model, which has been trained to perform clustering of the plurality of items of time series data based on their similarity. The second machine learning model may be prepared by using various clustering algorithms. The clustering algorithm used for the second machine learning model is, for example, Dynamic Time Warping (DTW).

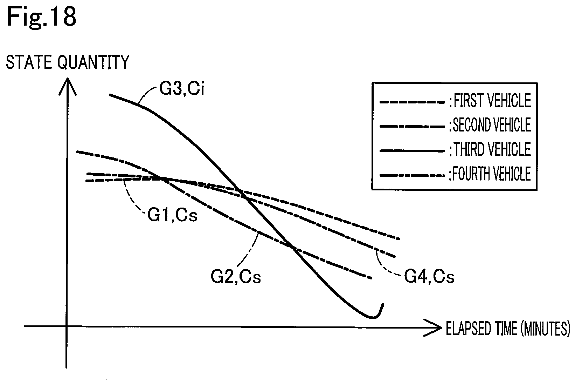

Fig. 18 is a diagram illustrating an example of a clustering method for time series data G1 to G4. Fig. 18 illustrates time series data G1 to G4 generated from one type of the state quantity Qs acquired for each of the four vehicles 100 shown in Fig. 1. The horizontal axis in Fig. 18 represents the time elapsed since the acquisition timing of the initial value of the state quantity Qs. The vertical axis in Fig. 18 represents the value of the state quantity Qs. The first time series data G1 is data representing time series changes in the state quantity Qs acquired from the first on-vehicle device 201 mounted on the first vehicle 101. The second time series data G2 is data representing time series changes in the state quantity Qs acquired from the second on-vehicle device 202 mounted on the second vehicle 102. The third time series data G3 is data representing time series changes in the state quantity Qs acquired from the third on-vehicle device 203 mounted on the third vehicle 103. The fourth time series data G4 is data representing time series changes in the state quantity Qs acquired from the fourth on-vehicle device 204 mounted on the fourth vehicle 104.

The abnormality determination unit 824, for example, calculates the similarity between the time series data G1 to G4 of the same type for each of the vehicles 100. Specifically, for example, the abnormality determination unit 824 calculates the distance between the respective points on the time series data G1 to G4, which is the target of the clustering, in a brute-force manner, and then extracts the route with the shortest distance between two items of the time series data G1 to G4, thereby calculating the similarity (step S522). Then, the abnormality determination unit 824 performs clustering of the time series data G1 to G4 generated from the same type of state quantity Qs for each vehicle 100 using the calculated similarity (step S523). Specifically, for example, the abnormality determination unit 824 classifies time series data G1, G2, and G4 having a similarity equal to or more than a predetermined second similarity threshold into the normal cluster Cs. Further, for example, the abnormality determination unit 824 classifies time series data G3 having a similarity less than the second similarity threshold into an abnormal cluster Ci, which is not included in the normal cluster Cs. In the present embodiment, the first time series data G1, the second time series data G2, and the fourth time series data G4 are classified into the normal cluster Cs. Further, the third time series data G3 is classified into the abnormal cluster Ci. The clustering method and the algorithms for the time series data G1 to G4 are not limited to those described above.

As shown in Fig. 17, after the step S523, the abnormality determination unit 824 performs relative comparison of the time series data G1 to G4 for each type of the state quantity Qs (step S524). The abnormality determination unit 824 then refers to the database to identify the vehicle identification information Vi and the device identification information Ei of the vehicle 103 that includes the time series data G3 classified into the abnormal cluster Ci. As a result, the abnormality determination unit 824 determines that the state of the on-vehicle device 203 mounted on the vehicle 103, from which the time series data G3 classified into the abnormal cluster Ci is acquired, is an abnormal state (Step S525: Yes, Step S526). On the other hand, the abnormality determination unit 824 refers to the database to identify the vehicle identification information Vi and the device identification information Ei of the vehicles 101, 102 and 104, from which the time series data G1, G2, and G4 classified into the normal cluster Cs are acquired. The abnormality determination unit 824 determines that the on-vehicle devices 201, 202 and 204 mounted on the vehicles 101, 102 and 104, from which the time series data G1, G2 and G4 classified into the normal cluster Cs are acquired, are in a normal state (step S525: No, step S527). In the present embodiment, the state of the third on-vehicle device 203 mounted on the third vehicle 103 is determined to be an abnormal state. Further, the first on-vehicle device 201 mounted on the first vehicle 101, the second on-vehicle device 202 mounted on the second vehicle 102, and the fourth on-vehicle device 204 mounted on the fourth vehicle 104 are all determined to be in a normal state.

According to the second embodiment above, the state quantity acquisition unit 626 can acquire the state quantity Qs multiple times at different timings. This allows the abnormality determination unit 824 to generate the time series data G1 to G4 using the state quantities Qs acquired multiple times at different timings.

Further, according to the second embodiment described above, the server device 80 can perform the abnormality determination process using the time series data G1 to G4 acquired for each of the plurality of vehicles 100 running between the production sites FC1 to FC3. According to such an embodiment, for example, even if there is variation in the first state quantity Qs1 for each of the plurality of vehicles 100, it is possible to more reliably determine whether the state of the on-vehicle device 2 is a normal state or an abnormal state by compensating for the variation in the first state quantity Qs1. Further, according to such an embodiment, for example, even if the reference value with regard to the initial value of the state quantity Qs differs between the target vehicle and an adjacent vehicle, it is possible to determine whether the state of the on-vehicle device 2 is a normal state or an abnormal state by compensating for the variation in the first state quantity Qs1.

C. Third Embodiment

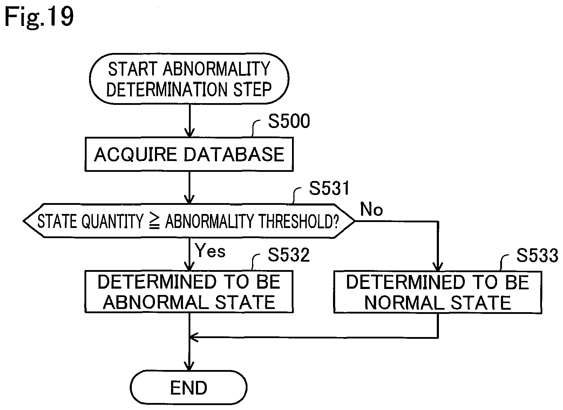

Fig. 19 is a flowchart illustrating details of the abnormality determination step according to a third embodiment. In the present embodiment, a part of the contents of the abnormality determination step differs from that in the first embodiment shown in the Figs. 15, 16 and that in the second embodiment shown in the Figs. 17, 18. Specifically, the abnormality determination unit 824 performs the abnormality determination process using the abnormality threshold (reference value) previously set as the abnormality determination information Aj and the database . The abnormality threshold is set for each type of the state quantity Qs, for example. Further, the abnormality threshold may also be set for each of the vehicle type and the grade of the vehicle 100, its receiving end, and the like. Other configurations are the same as those in the above embodiments. The same step and the same configuration as those in the above embodiments are given the same symbols and the explanations thereof are omitted. When a plurality of on-vehicle devices 2 are targeted for the management with respect to a single vehicle 100, the abnormality determination unit 824 performs each step from the step S531 to the step S533 for each on-vehicle device 2.

After the step S500, the abnormality determination unit 824 compares the state quantity Qs with the abnormality threshold (step S531). Then, if the state quantity Qs is equal to or more than the abnormality threshold (step S531: Yes), the abnormality determination unit 824 identifies the vehicle identification information Vi and the device identification information Ei of the vehicle 103, from which the state quantity Qs equal to or more than the abnormality threshold is acquired, by referring to the database . As a result, the abnormality determination unit 824 determines that the state of the on-vehicle device 203 mounted on the vehicle 103, from which the state quantity Qs equal to or more than the abnormality threshold is acquired, is an abnormal state (step S532). On the other hand, if the state quantity Qs is less than the abnormality threshold (step S531: No), the abnormality determination unit 824 identifies the vehicle identification information Vi and the device identification information Ei of the vehicles 101, 102 and 104, from which the state quantity Qs less than the abnormality threshold is acquired, by referring to the database . As a result, the abnormality determination unit 824 determines that the on-vehicle devices 201, 202, 204 mounted on the vehicles 101, 102 and 104, from which the state quantity Qs less than the abnormality threshold is acquired, are in a normal state (step S533).

According to the third embodiment described above, the server device 80 can perform the abnormality determination process by comparing the state quantity Qs acquired for each of the plurality of vehicles 100 running between the production sites FC1 to FC3 with a predetermined abnormality threshold. In this way, the contents of the abnormality determination process can be simplified. This enables easy determination as to whether the on-vehicle device 2 is in a normal state or an abnormal state.

When the vehicle 100 runs in the first operation mode, the expression "second operation mode" in the above embodiments can be replaced with "first operation mode" as appropriate, and the expression "remote control" can be replaced with "autonomous control" as appropriate. The expression "second operation mode" in each of the above embodiments can be replaced with "unmanned operation mode" as appropriate, and the expression "remote control" can be replaced with "control by unmanned operation" as appropriate.

D. Fourth Embodiment:

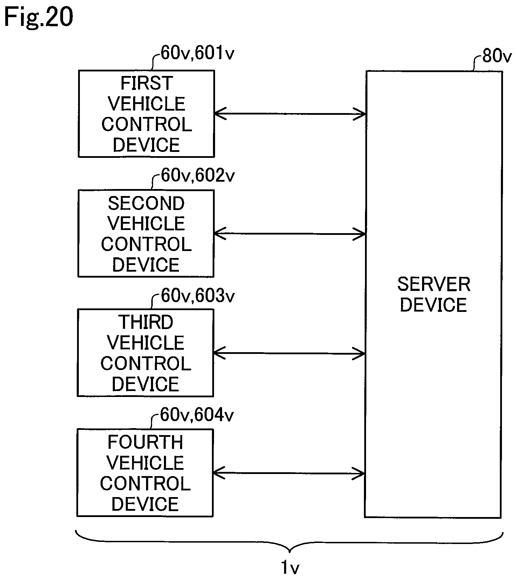

Fig. 20 is a block diagram illustrating the schematic structure of system 1v in the fourth embodiment. The system 1v has one or more vehicles 100v equipped with a vehicle control device 60v and a server device 80v. In Fig. 20, the illustration of the configuration of the vehicle 100v other than the vehicle control unit 60v is omitted. In the present embodiment, the vehicle 100v can run by the autonomous control of the vehicle 100v. That is, the vehicle 100v runs at least a portion of the section in the factory FC by the first driving mode. Other configurations of the system 1v are the same as in the first embodiment, unless otherwise described. Configurations identical to those of the first embodiment are marked with the same symbol and omitted from the explanations.

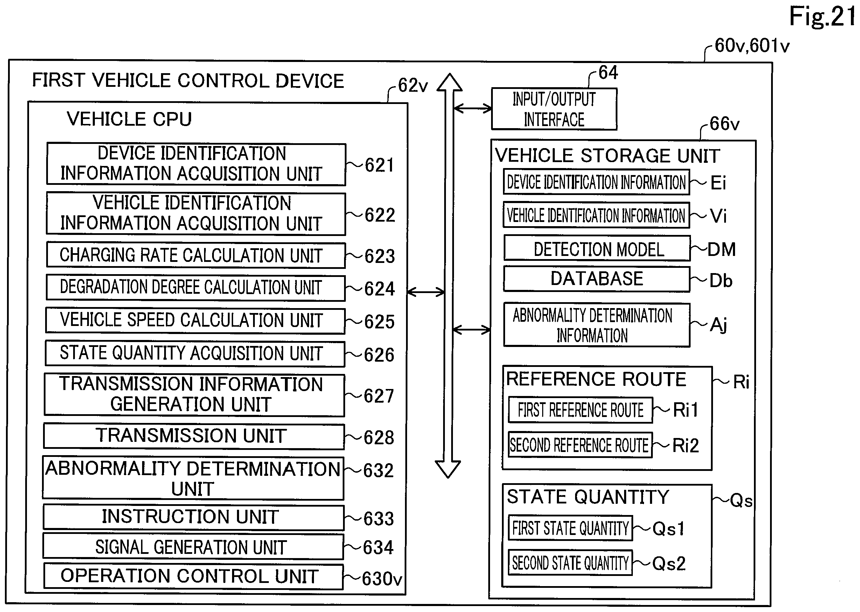

Figure 21 is a block diagram illustrating the schematic structure of the vehicle control device 60v in the fourth embodiment. In the present embodiment, the first vehicle control device 601v, the second vehicle control device 602v, the third vehicle control device 603v, and the fourth vehicle control device 604v have the same configuration. Therefore, in Fig.21, the configuration of the first vehicle control device 601v is shown as representative of the vehicle control devices 601v to 604v mounted on each of the multiple vehicles 101v to 104v. The vehicle control device 60v has an input/output interface 64, a vehicle CPU 62v as a central processing unit in the vehicle control device 60v, and a vehicle storage unit 66v as a storage unit in the vehicle control device 60v.

The vehicle storage unit 66v stores various information including the device identification information Ei for controlling the operation of the vehicle 100, the vehicle identification information Vi, the state quantity Qs of the on-vehicle device 2, various programs, the detection model DM, reference route Ri, the database , and the abnormal judgment information Aj.

The vehicle CPU 62v functions as a device identification information acquisition unit 621, a vehicle identification information acquisition unit 622, a charging rate calculation unit 623, a degradation degree calculation unit 624, and a vehicle speed calculation unit 625 by expanding the various programs stored in the vehicle storage unit 66v. Furthermore, the vehicle CPU 62v functions as a state quantity acquisition unit 626, a transmission information generation unit 627, a location acquisition unit 631, an abnormality determination unit 632, an instruction unit 633, a signal generation unit 634, and an operation control unit 630v.

The location acquisition unit 631 acquires vehicle location information using the captured images as detection results output from the external cameras 901-904, which are external sensors. The abnormality determination unit 632 performs determination process. The instruction unit 633 gives route change instructions. The signal generation unit 634 determines the target position to which the vehicle 100v should go next using the vehicle location information and the reference route Ri, one of the first reference route Ri1 or the second reference route Ri2, which is selected according to whether the route change instruction is given. The signal generation unit 634 generates a running control signal for causing the vehicle 100v to run to the determined target location. The operation control unit 630v controls the actuator group using the generated running control signal, thereby causing the vehicle 100v to run by following a parameter indicated by the running control signal. The operation control unit 630v repeats the acquisition of vehicle location information, the determination of a target location, the generation of a running control signal, and the control over the actuator in a predetermined cycle.

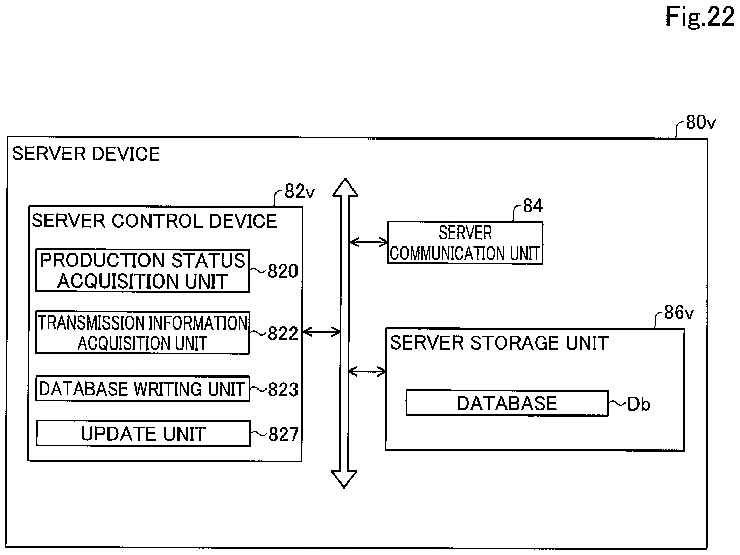

Fig. 22 is a block diagram illustrating a schematic structure of server device 80v in the fourth embodiment. The server device 80v includes a server communication unit 84 as a communication unit in the server device 80v, a server control device 82v as a central processing unit in the server device 80v, and a server storage unit 86v as a storage unit in the server device 80v.

The server storage unit 86v stores various information including various programs for controlling the operation of the server device 80v and the database .

The server control device 82v functions as a production status acquisition unit 820, a location acquisition unit 821, a transmission information acquisition unit 822, a database writing unit 823, and an update unit 827 by expanding the various programs stored in the server storage unit 86. The updating unit 827 causes the database stored in the vehicle storage unit 66v to be updated each time the database stored in the server storage unit 86v is updated so that the database stored in the vehicle storage unit 66v is up to date.

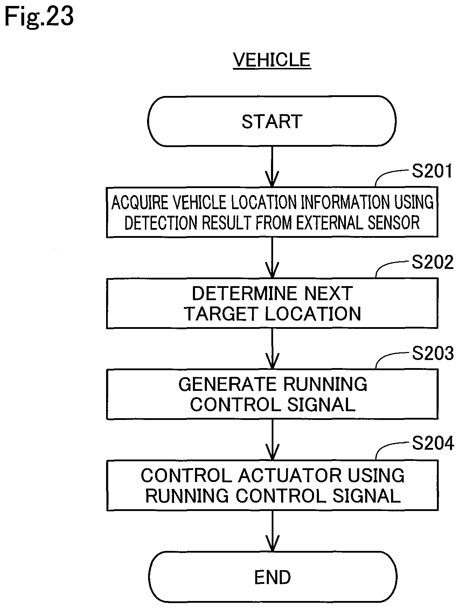

Fig. 23 is a flowchart showing a processing procedure for running control of the vehicle 100v in the fourth embodiment. The flow shown in Fig. 23 is repeated, for example, every predetermined time from the point at which the vehicle 100v starts running in the first driving mode.

In step S201, the vehicle control device 60v acquires vehicle location information using detection result output from the external cameras 901 to 904 as external sensors. In step S202, the signal generation unit 634 determines a target location to which the vehicle 100 is to move next. In step S203, the signal generation unit 634 generates a running control signal for causing the vehicle 100v to run to the determined target location. In step S204, the operation control unit 630v controls the actuator group using the generated running control signal, thereby causing the vehicle 100v to run by following a parameter indicated by the running control signal.

According to the fourth embodiment, it is possible to cause the vehicle 100v to run by autonomous control without controlling the vehicle 100v remotely using the server device 80v.

E. Alternative embodiments:

E-1. Alternative Embodiment 1

In alternative embodiments, the target on-vehicle device 2 to be managed may be the engine 31 shown in Fig. 5, in addition to the main battery 20. When the target on-vehicle device 2 to be managed is the engine 31, the measurement unit 9 includes, for example, in addition to the various sensors 91 to 95 shown in Fig. 5, an engine noise sensor, an engine vibration sensor, a cooling water temperature sensor, and an oil temperature sensor. The engine noise sensor measures abnormal noise generated by the engine 31. The engine vibration sensor measures abnormal vibrations that occur in the engine 31. The cooling water temperature sensor measures the temperature of the cooling water for the engine 31. The oil temperature sensor measures the temperature of the engine oil. Further, the vehicle CPUs 62, 62v or the server control devices 82, 82v may further include a knocking amount calculation unit that calculates a knocking amount indicating the occurrence of knocking in the engine 31 using the measurement values acquired by the above sensors and the like. In this case, the state quantity acquisition unit 626 acquires, for example, the degree of abnormal noise and vibration generated by the engine 31, the knocking amount, the temperature of the cooling water of the engine 31, and the temperature of the engine oil, as the state quantity Qs indicating the state of the engine 31. Further, the device identification information acquisition unit 621 acquires the engine ID (identifier) assigned to each engine 31 to identify the engine 31, as the device identification information Ei. Such an embodiment allows appropriate management as to which of the vehicles 100, 100v capable of running in an unmanned driving mode has which of the plural types of on-vehicle device 2 mounted on the vehicle 100. In addition, such an embodiment enables management of the state of the engine 31 mounted on the vehicle 100 that is capable of running by an unmanned driving mode. Such an embodiment allows to manage the condition of the engine 31 installed in the vehicles 100, 100v, which is capable of running in unmanned driving mode.

E-2. Alternative Embodiment 2

In alternative embodiments, the target on-vehicle device 2 to be managed may be the first motor 331 serving as the driving motor 33 shown in Fig. 5. When the target on-vehicle device 2 to be managed is the first motor 331, the measurement unit 9 includes, for example, a motor noise sensor and a motor temperature sensor. The motor noise sensor measures noise generated by the first motor 331. The motor temperature sensor measures the temperature of the first motor 331. In this case, the state quantity acquisition unit 626 acquires, for example, the abnormal noise generated from the first motor 331 and the temperature of the first motor 331 as the state quantity Qs indicating the state of the first motor 331. Further, the device identification information acquisition unit 621 acquires the first motor ID (identifier) assigned to each first motor 331 to identify the first motor 331 as the device identification information Ei. Such an embodiment enables appropriate management as to which of the vehicles 100, 100v capable of running in an unmanned driving mode has the first motor 331. Furthermore, such an embodiment enables management of the state of the first motor 331 mounted on the vehicles 100, 100v that is capable of running by an unmanned driving mode. Note that, the target on-vehicle device 2 to be managed may be the second motor 332 serving as the driving motor 33.

E-3. Alternative Embodiment 3

In alternative embodiments, the target on-vehicle device 2 to be managed may be the damper 37 shown in Fig. 5. When the target on-vehicle device 2 to be managed is the damper 37, the measurement unit 9 includes, for example, a vehicle vibration sensor that measures vibration propagated from the wheels 30 and the axles 35 to the undercarriage (not shown). The undercarriage (not shown) constitutes the framework of the vehicles 100, 100v and serves as a member to attach and secure the engine 31 and the driving motor 33 serving as the driving power source of the vehicles 100, 100v, the suspension (not shown) including the damper 37, seats (not shown), and the like. In this case, the state quantity acquisition unit 626 acquires, for example, the degree of vibration propagated from the wheels 30 and the axles 35 to the undercarriage as the state quantity Qs. Further, the device identification information acquisition unit 621 acquires a damper ID (identifier) assigned to each damper 37 to identify the damper 37, as the device identification information Ei. Such an embodiment enables appropriate management as to which of the vehicles 100, 100v capable of running in an unmanned driving mode has the damper 37. In addition, such an embodiment enables management of the state of the damper 37 mounted on the vehicles 100, 100v that is capable of running by an unmanned driving mode.

E-4. Alternative Embodiment 4

In the embodiments described above, the device identification information acquisition unit 621, which acquires the device identification information Ei, was implemented as a function of the vehicle CPUs 62, 62v. Further, in the embodiments described above, the vehicle identification information acquisition unit 622, which acquires the vehicle identification information Vi, was implemented as a function of the vehicle CPUs 62, 62v. In contrast, in alternative embodiments, at least one of the device identification information acquisition unit 621 and the vehicle identification information acquisition unit 622 may be implemented as a function of the server control devices 82, 82v. When the device identification information acquisition unit 621 is implemented as a function of the server control devices 82, 82v, the device identification information acquisition unit 621 may acquire the device identification information Ei by, for example, accepting input of the device identification information Ei from a user via an input operation unit (not shown). The device identification information acquisition unit 621 may acquire the device identification information Ei, for example, by receiving an identification signal containing the device identification information Ei transmitted from the on-vehicle device 2. Further, when the vehicle identification information acquisition unit 622 is implemented as a function of the server control device 82, the vehicle identification information acquisition unit 622 may acquire the vehicle identification information Vi by, for example, accepting input of the vehicle identification information Vi from a user via an input operation unit (not shown). The vehicle identification information acquisition unit 622 may acquire the vehicle identification information Vi, for example, by receiving an identification signal containing the vehicle identification information Vi transmitted from the on-vehicle device 2. Also in this embodiment, it is possible to acquire the device identification information Ei and the vehicle identification information Vi and generate the database in which the device identification information Ei and the vehicle identification information Vi are associated with each other. This allows appropriate management as to which of the vehicles 100, 100v capable of running in an unmanned driving mode is equipped with the on-vehicle device 2.

D-5. Alternative Embodiment 5

In the embodiments described above, the state quantity acquisition unit 626 acquired a plurality of types of state quantity Qs multiple times at different timings. Specifically, the state quantity acquisition unit 626 acquires both the first state quantity Qs1, which is the state quantity Qs before the vehicles 100, 100v run in an unmanned driving mode, and the second state quantity Qs2, which is the state quantity Qs while the vehicles 100, 100v are running between the production sites FC1 to FC3 in an unmanned driving mode. Furthermore, the state quantity acquisition unit 626 acquired the second state quantity Qs2 multiple times at different timings. In contrast, in alternative embodiments, the state quantity acquisition unit 626 may acquire only one of the first state quantity Qs1 and the second state quantity Qs2. Further, the state quantity acquisition unit 626 may acquire only one type of the state quantity Qs. Furthermore, the state quantity acquisition unit 626 may acquire the second state quantity Qs2 only once. Also in such an embodiment, it is possible to manage the state of the on-vehicle device 2 mounted on the vehicles 100, 100v that are capable of running by an unmanned driving mode. Further, also in this embodiment, the determination process can be performed by various methods according to the number and the type of the acquired state quantity Qs.

E-6. Alternative Embodiment 6

In each of the embodiments from the first to the third embodiment described above, the instruction unit 825, which provides a route change instruction, was implemented as a function of the server control device 82. In contrast, in alternative embodiments, the instruction unit 825 may be implemented as a function of the vehicle CPUs 62, 62v. In this case, for example, if the instruction unit 825 is implemented as a function of the vehicle CPUs 62, 62v and the abnormality determination unit 824 is implemented as a function of the server control device 82, the result of determination in the determination process is transmitted from the server device 80 to the vehicle control devices 60, 60v. The instruction unit 825 then provides a route change instruction based on the received determination result. Also in such an embodiment, it is possible to change the destination of the vehicles 100, 100v running in the unmanned driving mode according to the result of the determination in the determination process.

E-7. Alternative Embodiment 7

In each of the embodiments from the first to the third embodiment described above, the abnormality determination unit 824, which performs the determination process, which is at least one of the abnormality determination process and the adjustment determination process, was implemented as a function of the server control device 82. In contrast, in alternative embodiments, the abnormality determination unit 824 may be implemented as a function of the vehicle CPUs 62, 62v. In this case, for example, if the abnormality determination unit 824 is implemented as a function of the vehicle CPU s 62, 62v and the instruction unit 825 is implemented as a function of the server device 80, the result of determination in the determination process is transmitted from the vehicle control device 60 to the server device 80. The instruction unit 825 then provides a route change instruction based on the received determination result. Also in such an embodiment, it is possible to change the destination of the vehicles 100,100v running in the unmanned driving mode according to the result of the determination in the determination process.

E-8. Alternative Embodiment 8

In the embodiments described above, the state quantity acquisition unit 626, which acquires the state quantity Qs, was implemented as a function of the vehicle CPUs 62, 62v. In contrast, in alternative embodiments, the state quantity acquisition unit 626 may be implemented as a function of the server control devices 82, 82v. When the state quantity acquisition unit 626 is implemented as a function of the server control devices 82, 82v, the state quantity acquisition unit 626 may acquire the state quantity Qs, for example, by acquiring the measurement values of the various sensors 91 to 95 shown in Fig. 5, through communication with the vehicles 100, 100v. Also in such an embodiment, it is possible to acquire the state quantity Qs and store the acquired state quantity Qs in the database .

E-9. Alternative Embodiment 9

In the embodiments described above, as shown in Fig. 14, the abnormality determination unit 824 performed both the abnormality determination process and the adjustment determination process. In contrast, in alternative embodiments, the abnormality determination unit 824 may perform the abnormality determination process without performing the adjustment determination process. In the case where the abnormality determination unit 824 performs only the abnormality determination process, for example, the instruction unit 825 provides a route change instruction to the vehicles 100, 100v equipped with the on-vehicle device 2 that is determined to be in an abnormal state by the abnormality determination process. Further, in alternative embodiments, the abnormality determination unit 824 may perform the adjustment determination process without performing the abnormality determination process. When the abnormality determination unit 824 performs only the adjustment determination process, for example, the instruction unit 825 provides a route change instruction to the vehicles 100, 100v equipped with the on-vehicle device 2 of the same lot as the on-vehicle device 2 determined to be in an abnormal state. Further, in the case where the abnormality determination unit 824 performs only the adjustment determination process, for example, the instruction unit 825 may also provide a route change instruction to the vehicles 100, 100v included in the same manufacturing unit as that of the vehicles 100, 100v equipped with the on-vehicle device 2 determined to be in an abnormal state. The "vehicles 100, 100v included in the same manufacturing unit" refers to, for example, vehicles 100, 100v manufactured in the same manufacturing line, the same production sites FC1 to FC3, and the same manufacturing facility as those of the vehicles 100, 100v equipped with the on-vehicle device 2 that is determined to be in an abnormal state. The "vehicles 100, 100v included in the same manufacturing unit" may also be, for example, vehicles 100, 100v that was manufactured within a predetermined time period from the timing when the vehicles 100, 100v equipped with the on-vehicle device 2 determined to be in an abnormal state was manufactured. As described above, even when only one of the abnormality determination process and the adjustment determination process is performed, the destination of the vehicles 100, 100v running in the unmanned driving mode can be changed according to the situation.

E-10. Alternative Embodiment 10

In the embodiments described above, as shown in Fig. 1, when it was determined that the on-vehicle device 2 was in an abnormal state or that the maintenance of the on-vehicle device 2 was recommended, the destination during the running in the unmanned driving mode was changed to the maintenance site FC3. However, the destination after the change is not limited to the maintenance site FC3. When it was determined in the first production site FC1 that the on-vehicle device 2 mounted on the vehicles 100, 100v was in an abnormal state or that the maintenance of the on-vehicle device 2 was recommended, the destination during the running in the unmanned driving mode may be changed to, for example, the first production site FC1. In such an embodiment, the on-vehicle device 2 can be replaced or repaired at the first production site FC1 where the on-vehicle device 2 was mounted.

E-11. Alternative Embodiment 11

In the embodiments described above, the device identification information Ei, the vehicle identification information Vi, and the state quantity Qs were associated with each other by the transmission information generation unit 627 at the timing when the transmission information was generated. However, the present disclosure is not limited to that described above. At the timing when the transmission information acquisition unit 822 acquires the device identification information Ei, the vehicle identification information Vi, and the state quantity Qs, the device identification information Ei, the vehicle identification information Vi, and the state quantity Qs may not be associated with each other. In this case, the transmission information acquisition unit 822 may associate, for example, the device identification information Ei, the vehicle identification information Vi, and the state quantity Qs acquired within a predetermined time period with each other. Further, the transmission information acquisition unit 822 may associate, for example, the device identification information Ei, the vehicle identification information Vi, and the state quantity Qs, according to the sending end of the device identification information Ei, the vehicle identification information Vi, and the state quantity Qs. Also in such an embodiment, it is possible to generate the database in which the device identification information Ei, the vehicle identification information Vi, and the state quantity Qs are associated with each other.

E-12. Alternative Embodiment 12

In the embodiments described above, as shown in Fig. 1 and Fig. 2, the position information of the vehicles 100, 100v running in the unmanned driving mode was acquired by a plurality of external cameras 901 to 904 provided between the production sites FC1 to FC3. However, the present disclosure is not limited to that described above. The position information of the vehicles 100, 100v running by the unmanned driving mode may also be acquired, for example, using one or more on-vehicle devices 2 mounted on the vehicles 100, 100v. The on-vehicle device 2 in this case is, for example, a car navigation device (not shown), an on-vehicle camera (not shown), and a location information reception unit (not shown). The location information reception unit is, for example, a GNSS receiver capable of receiving radio waves transmitted from GNSS sanitation. In such an embodiment, it is possible to acquire the vehicle location information of the vehicles 100, 100v running in the unmanned driving mode without installing the external cameras 901 to 904 in the production sites FC1 to FC3. This allows for a wider option of locations where the vehicle 100 can run by the unmanned driving mode.

E-13. Alternative Embodiment 13

In alternative embodiments, the vehicle control devices 60, 60v may acquire at least one of the device identification information Ei and the vehicle identification information Vi by analyzing the captured image acquired by capturing the image capture range RG1 to RG4 including the vehicles 100, 100v and the on-vehicle device 2. In alternative embodiments, the vehicle control devices 60, 60v may transmit the captured image to the server devices 80, 80v as transmission information to acquire at least one of the device identification information Ei and the vehicle identification information Vi at the server devices 80, 80v. In this case, at least one of the device identification information Ei and the vehicle identification information Vi is extracted by analyzing the captured image in the server devices 80, 80v. In such an embodiment, at least one of the device identification information Ei and the vehicle identification information Vi can be obtained using the captured images obtained by capturing the imaging range RG1 to RG4 including the vehicles 100, 100v and the on-vehicle device 2.

E-14. Alternative Embodiment 14

In the embodiments described above, the external sensors are cameras 901 to 904. In contrast, the external sensor may not be cameras 901 to 904, but may be, for example, LiDAR (Light Detection And Ranging). In this case, detection result output from the external sensor may be three-dimensional point cloud data representing the vehicles 100, 100v. The server devices 80, 80v and the vehicles 100, 100v may acquire the vehicle location information through template matching using the three-dimensional point cloud data as the detection result and reference point cloud data, for example.

E-15. Alternative Embodiment 15

In each of the above embodiments from the first embodiment to the third embodiment, the server device 80 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server device 80 may acquire vehicle location information, determine a target location to which the vehicle 100 is to move next, and generate a route from a current location of the vehicle 100 indicated by the acquired vehicle location information to the target location. The server device 80 may generate a route to the target location between the current location and a destination or generate a route to the destination. The server device 80 may transmit the generated route to the vehicle 100. The vehicle 100 may generate a running control signal in such a manner as to cause the vehicle 100 to run along the route received from the server device 80 and control actuator group using the generated running control signal.

(2) The server device 80 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control actuator group using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. The Internal sensor may include, for example, sensors that detect the state of motion of the vehicle 100, the state of operation of various parts of the vehicle 100, and the environment surrounding the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server device 80 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

E-16. Alternative Embodiment 16

In the above fourth embodiment in which the vehicle 100v can be running by autonomous control, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

E-17. Alternative Embodiment 17

In the above fourth embodiment in which the vehicle 100v can be running by autonomous control, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control an actuator of the vehicle 100v using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 1v may be entirely provided at the vehicle 100v. Specifically, the processes realized by the system 1v in the present disclosure may be realized by the vehicle 100v alone. In case that the process performed by system 1v is performed by vehicle 100v alone, vehicle 100v may obtain state quantity Qs from another vehicle 100v.

E-18. Alternative Embodiment 18

n each of the above embodiments from the first embodiment to the third embodiment, the server device 80 automatically generates a running control signal to be transmitted to the vehicle 100. By contrast, the server device 80 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server device 80 through wire communication or wireless communication, for example, and the server device 80 may generate a running control signal responsive to the operation on the operating device.

E-19. Alternative Embodiment 19

In each of the above-described embodiments, the vehicles 100, 100v are simply required to have a configuration to become movable by unmanned driving. The vehicles 100, 100v may embodied as a platform having the following configuration, for example. The vehicles 100, 100v are simply required to include at least actuator group and vehicle control devices 60, 60v. More specifically, in order to fulfill three functions including "run," "turn," and "stop" by unmanned driving, the actuators may include a driving device, a steering device and a braking device. The actuators are controlled by the controller that controls running of the vehicles 100,100v. In order for the vehicle s 100, 100v to acquire information from outside for unmanned driving, the vehicles 100 ,100v are simply required to include the communication device further. Specifically, the vehicles 100,100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicles 100,100v before the vehicles 100,100v are shipped from a factory, or a remaining component such as a bodyshell may be mounted on the vehicles 100,100v after the vehicles 100,100v are shipped from a factory while the remaining component such as a bodyshell is not mounted on the vehicles 100, 100v. Each of components may be mounted on the vehicles 100,100v from any direction such as from above, from below, from the front, from the back, from the right, or from the left. Alternatively, these components may be mounted from the same direction or from respective different directions. The location determination for the platform may be performed in the same way as for the vehicles 100,100v in the first embodiments.

E-20. Alternative Embodiment 20

The vehicles 100,100v may be manufactured by combining a plurality of modules. The module means a unit composed of one or more components grouped according to a configuration or function of the vehicles 100,100v. For example, a platform of the vehicles 100,100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicles 100,100v different from the platform may be modularized. Various modules may include an arbitrary exterior component such as a bumper or a grill, or an arbitrary interior component such as a seat or a console. Not only the vehicles 100,100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

E-21. Alternative Embodiment 21

A configuration for realizing running of vehicles 100,100v by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured
The present disclosure is not limited to the embodiments described above, but can be realized in various configurations without departing from the spirit thereof. For example, the technical features of the embodiments corresponding to the technical features in each of the aspects stated in the Summary of the Invention section may be replaced or combined as appropriate to solve some or all of the problems described above or to achieve some or all of the effects described above. Further, if the technical feature is not described as essential in this specification, the technical feature may be deleted as appropriate.

**Claims**

1. A moving object (100 ; 100v) configured to be capable of moving by unmanned driving comprising:
an unmanned driving mode that has at least one of a first driving mode in which the moving object (100 ; 100v) moving by autonomous control and a second driving mode in which the moving object (100 ; 100v) moving by remote control:

   an on-moving object device (2) mounted on the moving object (100 ; 100v); and
   a moving object control device (60 ; 60v) configured to control an operation of the moving object (100 ; 100v), wherein the moving object control device (60 ; 60v) includes:

   a device identification information acquisition unit (621) that acquires device identification information, which is identification information of the on-moving object device (2);
   a moving object identification information acquisition unit (622) that acquires moving object identification information, which is identification information of the moving object (100 ; 100v); and
   a transmission unit (628) that transmits the device identification information and the moving object identification information to a server device (80; 80v).

2. The moving object (100 ; 100v) according to claim 1, further comprising:

   a state quantity acquisition unit (626) that acquires a state quantity indicating a state of the on-moving object device (2),
   wherein the transmission unit (628) transmits the state quantity to the server device (80; 80v), in addition to the device identification information and the moving object identification information.

3. The moving object (100 ; 100v) according to claim 2, wherein the state quantity acquisition unit (626) acquires the state quantity, which is at least one of a first state quantity, which is the state quantity at a timing before the moving object (100 ; 100v) moves in the unmanned driving mode, and a second state quantity, which is the state quantity at a timing when the moving object (100 ; 100v) is moving in the unmanned driving mode between production sites where each production step is performed during a process of manufacturing the moving object (100 ; 100v), in association with the timing corresponding to the state quantity.

4. The moving object (100 ; 100v) according to claim 3, wherein the state quantity acquisition unit (626) acquires the state quantity multiple times at different timings.

5. The moving object (100v) according to claim 3 or 4, further comprising:
an abnormality determination unit (632) that performs a determination process, which is at least one of (1a) an abnormality determination process for determining whether the state of the on-moving object device (2) is a normal state or an abnormal state, and (1b) an adjustment determination process for determining whether or not to recommend maintenance of the on-moving object device (2), using the state quantity acquired by the state quantity acquisition unit (626).

6. The moving object (100v) according to claim 5, further comprising:
an instruction unit (633) that provides a route change instruction to change a destination when the moving object (100v) moves in the unmanned driving mode from a predetermined target location to a maintenance site where at least one of a replacement process for replacing the on-moving object device (2) mounted on the moving object (100v) with another on-moving object device (2) and a repair process for repairing the on-moving object device (2) mounted on the moving object (100v) is performed, in at least one of (2a) a first case in which it is determined in the abnormality determination process that the state of the on-moving object device (2) is an abnormal state, and (2b) a second case in which it is determined in the adjustment determination process that maintenance of the on-moving object device (2) is recommended.

7. The moving object (100v) according to claim 5 or 6, wherein a plurality of the moving object (100v)s are moving between the production sites, and the abnormality determination unit (632) performs the determination process by relative comparison of the state quantity acquired for each of the plurality of the moving objects (100v).

8. The moving object (100v) according to claim 7, wherein the abnormality determination unit (632) performs the determination process by relative comparison of at least the state quantity acquired from a target moving object (100v), which is one of the plurality of the moving objects (100v), and the state quantity acquired from an adjacent moving object (100v), which is the moving object (100v) moving either before or after the target moving object (100v).

9. The moving object (100v) according to claim 7, wherein

the state quantity acquisition unit (626) acquires the state quantity multiple times at different timings for each of the plurality of the moving objects (100v), and
the abnormality determination unit (632) performs the determination process by relative comparison of time series data that represent time series changes in the state quantity and that are acquired for each of the plurality of the moving objects (100v).

10. A server device (80; 80v), comprising:

a server control device (82; 82v) including a transmission information acquisition unit (822) that acquires device identification information, which is identification information of an on-moving object device (2) mounted on a moving object (100 ; 100v) configured to be capable of moving by unmanned driving, and moving object identification information, which is identification information of the moving object (100 ; 100v); and
a storage unit (86; 86v) that stores a database (Db) in which the acquired device identification information and the acquired moving object identification information are associated with each other,
wherein the moving object (100 ; 100v) has an unmanned driving mode that has at least one of a first driving mode in which the moving object (100 ; 100v) moving by autonomous control and a second driving mode in which the moving object (100 ; 100v) moving by remote control.

11. The server device (80; 80v) according to claim 10, wherein

the server control device (82; 82v) further includes a state quantity acquisition unit (626) that acquires a state quantity indicating a state of the on-moving object device (2),
the transmission information acquisition unit (822) acquires the state quantity, in addition to the device identification information and the moving object identification information, and
the database (Db) is an assembly of data in which the device identification information, the moving object identification information, and the state quantity are associated with each other.

12. The server device (80; 80v) according to claim 11, wherein
the transmission information acquisition unit (822) acquires the state quantity, which is at least one of a first state quantity, which is the state quantity at a timing before the moving object (100 ; 100v) moves in the unmanned driving mode, and a second state quantity, which is the state quantity at a timing when the moving object (100 ; 100v) is moving in the unmanned driving mode between production sites where each production step is performed during a process of manufacturing the moving object (100 ; 100v), in association with the timing corresponding to the state quantity.

13. The server device (80; 80v) according to claim 12, wherein
the transmission information acquisition unit (822) acquires the state quantity multiple times at different timings.

14. The server device (80) according to claim 12 or 13, further comprising:
an abnormality determination unit (824) that performs a determination process, which is at least one of (3a) an abnormality determination process for determining whether the state of the on-moving object device (2) is a normal state or an abnormal state, and (3b) an adjustment determination process for determining whether or not to recommend maintenance of the on-moving object device (2), using the state quantity acquired by the transmission information acquisition unit (822).

15. The server device (80) according to claim 14, further comprising:
an instruction unit (825) that provides a route change instruction to change a destination when the moving object (100) moves in the unmanned driving mode from a predetermined target location to a maintenance site where at least one of a replacement process for replacing the on-moving object device (2) mounted on the moving object (100) with another on-moving object device (2) and a repair process for repairing the on-moving object device (2) mounted on the moving object (100) is performed, in at least one of (4a) a first case in which it is determined in the abnormality determination process that the state of the on-moving object device (2) is an abnormal state, and (4b) a second case in which it is determined in the adjustment determination process that maintenance of the on-moving object device (2) is recommended.

16. The server device (80) according to claim 14 or 15, wherein

a plurality of the moving objects (100) are moving between the production sites, and
the abnormality determination unit (824) performs the determination process by relative comparison of the state quantity acquired for each of the plurality of the moving objects (100).

17. The server device (80) according to claim 16, wherein the abnormality determination unit (824) performs the determination process by relative comparison of at least the state quantity acquired from a target moving object (100), which is one of the plurality of the moving objects (100), and the state quantity acquired from an adjacent moving object (100), which is the moving object (100) moving either before or after the target moving object (100).

18. The server device (80) according to claim 16, wherein

the transmission information acquisition unit (822) acquires the state quantity multiple times at different timings for each of the plurality of the moving objects (100), and
the abnormality determination unit (824) performs the determination process by relative comparison of time series data that represent time series changes in the state quantity and that are acquired for each of the plurality of the moving objects (100).

19. A moving object system (1; 1v), comprising a moving object (100 ; 100v) configured to be capable of moving by unmanned driving and a server device (80; 80v),

the moving object (100 ; 100v) having an unmanned driving mode that has at least one of a first driving mode in which the moving object (100 ; 100v) moving by autonomous control and a second driving mode in which the moving object (100 ; 100v) moving by remote control,
the moving object (100 ; 100v) comprising:

an on-moving object device (2) mounted on the moving object (100 ; 100v); and
a moving object control device (60 ; 60v) configured to control an operation of the moving object (100 ; 100v), wherein the moving object control device (60 ; 60v) includes:

a device identification information acquisition unit (621) that acquires device identification information, which is identification information of the on-moving object device (2);
a moving object identification information acquisition unit (622) that acquires moving object identification information, which is identification information of the moving object (100 ; 100v); and
a transmission unit (628) that transmits the device identification information and the moving object identification information to the server device (80; 80v), and
the server device (80; 80v) includes:

a server control device (82; 82v) including a transmission information acquisition unit (822) that acquires the device identification information and the moving object identification information; and
a storage unit (86; 86v) that stores a database (Db) in which the acquired device identification information and the acquired moving object identification information are associated with each other.

20. A method for managing an on-moving object device (2) mounted on a moving object (100 ; 100v) configured to be capable of moving by unmanned driving,

the moving object (100 ; 100v) having an unmanned driving mode that has at least one of a first driving mode in which the moving object (100 ; 100v) moving by autonomous control and a second driving mode in which the moving object (100 ; 100v) moving by remote control,
the method for managing the on-moving object device (2) comprising:

a device identification information acquisition step of acquiring device identification information, which is identification information of the on-moving object device (2);
a moving object identification information acquisition step of acquiring moving object identification information, which is identification information of the moving object (100 ; 100v); and
a storage step for storing a database (Db) in which the acquired device identification information and the acquired moving object identification information are associated with each other.

Fig.1

SERVER DEVICE

80

DEVICE IDENTIFICATION INFORMATION, VEHICLE IDENTIFICATION INFORMATION, AND INITIAL VALUE OF STATE QUANTITY

IDENTIFICATION CANDIDATE DATA, ELAPSED-TIME VALUE OF STATE QUANTITY

FC,1

SECOND STEP MANAGEMENT DEVICE 72

FC2

2,20,201

FC1

901

RG1

902

RG2

2,20,202

100,101

100,102

2,20,203

100,103

2,20,204

100,104

FIRST PRODUCTION SITE (FIRST STEP)

B1

R1

E1, B2,B3

Br

NORMAL STATE

R2

SECOND PRODUCTION SITE (SECOND STEP)

E2

FC3

2,20,205

100,103

FIRST STEP MANAGEMENT DEVICE 71

100,103

ABNORMAL STATE

903

RG3

R3

E3,B4

R4

E4

MAINTENANCE SITE

904

RG4

EP 4 425 403 A1

Fig.2

Fig.3

FIRST STEP MANAGEMENT DEVICE ⌐71

⌐712

FIRST STEP CONTROL DEVICE

⌐712a

FIRST STEP INFORMATION
ACQUISITION UNIT

⌐714

FIRST STEP
COMMUNICATION
UNIT

⌐716

FIRST STEP
STORAGE
UNIT

Fig.4

SECOND STEP MANAGEMENT DEVICE ⌐72

SECOND STEP CONTROL DEVICE ⌐722

SECOND STEP INFORMATION ACQUISITION UNIT ⌐722a

SECOND STEP COMMUNICATION UNIT ⌐724

SECOND STEP STORAGE UNIT ⌐726

Fig.5

Fig.6

FIRST
VEHICLE
CONTROL
DEVICE
60,601

SECOND
VEHICLE
CONTROL
DEVICE
60,602

THIRD
VEHICLE
CONTROL
DEVICE
60,603

FOURTH
VEHICLE
CONTROL
DEVICE
60,604

SERVER
DEVICE
80

1

Fig.7

FIRST VEHICLE CONTROL DEVICE — 60,601

— 62

VEHICLE CPU

| DEVICE IDENTIFICATION INFORMATION ACQUISITION UNIT | ~621 |

| VEHICLE IDENTIFICATION INFORMATION ACQUISITION UNIT | ~622 |

CHARGING RATE CALCULATION UNIT ~623

DEGRADATION DEGREE CALCULATION UNIT ~624

VEHICLE SPEED CALCULATION UNIT ~625

STATE QUANTITY ACQUISITION UNIT ~626

TRANSMISSION INFORMATION GENERATION UNIT ~627

TRANSMISSION UNIT ~628

OPERATION CONTROL UNIT ~630

INPUT/OUTPUT INTERFACE — 64

VEHICLE STORAGE UNIT — 66

DEVICE IDENTIFICATION INFORMATION ~ Ei

VEHICLE IDENTIFICATION INFORMATION ~ Vi

STATE QUANTITY ~Qs

FIRST STATE QUANTITY ~Qs1

SECOND STATE QUANTITY ~Qs2

EP 4 425 403 A1

Fig.8

EP 4 425 403 A1

SERVER DEVICE ~80

SERVER CONTROL DEVICE ~82

PRODUCTION STATUS ACQUISITION UNIT ~820

LOCATION ACQUISITION UNIT ~821

TRANSMISSION INFORMATION ACQUISITION UNIT ~822

DATABASE WRITING UNIT ~823

ABNORMALITY DETERMINATION UNIT ~824

INSTRUCTION UNIT ~825

REMOTE CONTROL UNIT ~826

SERVER COMMUNICATION UNIT ~84

SERVER STORAGE UNIT ~86

DETECTION MODEL ~DM

REFERENCE ROUTE ~Ri

FIRST REFERENCE ROUTE ~Ri1

SECOND REFERENCE ROUTE ~Ri2

DATABASE ~Db

ABNORMALITY DETERMINATION INFORMATION ~Aj

Fig.9

SERVER DEVICE

START

S101
ACQUIRE VEHICLE LOCATION INFORMATION USING DETECTION RESULT FROM EXTERNAL SENSOR

S102
DETERMINE NEXT TARGET LOCATION

S103
GENERATE RUNNING CONTROL SIGNAL

S104
TRANSMIT RUNNING CONTROL SIGNAL TO VEHICLE

END

VEHICLE

START

S105
RECEIVE RUNNING CONTROL SIGNAL FROM SERVER DEVICE

S106
CONTROL ACTUATOR USING RUNNING CONTROL SIGNAL

END

Fig.10

START DATABASE
WRITING STEP (S3)

S31

DATABASE GENERATION STEP

S35

DATABASE UPDATE STEP

END

## 80 DATABASE GENERATION STEP (S31)                                    Fig.11

### SERVER DEVICE (80)

**S319** ACQUIRE TRANSMISSION INFORMATION? — No

Yes ↓ **S320**

GENERATE DATABASE
USING ACQUIRED
TRANSMISSION INFORMATION

END

### VEHICLE (100)

**S311** ON-VEHICLE DEVICE (MAIN BATTERY) MOUNTED? — No

Yes ↓ **S312**

ACQUIRE DEVICE IDENTIFICATION INFORMATION (BATTERY ID)

↓ **S313**

ACQUIRE VEHICLE IDENTIFICATION INFORMATION

↓ **S314**

CALCULATE INITIAL VALUE OF CHARGING RATE OF MAIN BATTERY

↓ **S315**

CALCULATE INITIAL VALUE OF DEGRADATION DEGREE OF MAIN BATTERY

↓ **S316**

ACQUIRE FIRST STATE QUANTITY CORRESPONDING TO INITIAL VALUE OF STATE QUANTITY

↓ **S317**

GENERATE TRANSMISSION INFORMATION

TRANSMISSION INFORMATION
- DEVICE IDENTIFICATION INFORMATION (BATTERY ID)
- VEHICLE IDENTIFICATION INFORMATION
- INITIAL VALUE OF STATE QUANTITY (OUTPUT CURRENT VALUE, OUTPUT VOLTAGE VALUE, TEMPERATURE, CHARGING RATE, DEGRADATION DEGREE) OF MAIN BATTERY } FIRST STATE QUANTITY

END

TRANSMIT TRANSMISSION INFORMATION (S318)

EP 4 425 403 A1

Fig.12

Db

Ei  Vi

| DEVICE IDENTIFICATION INFORMATION (BATTERY ID) | VEHICLE IDENTIFICATION INFORMATION | FIRST STATE QUANTITY INITIAL VALUE | SECOND STATE QUANTITY | | | | | |
|---|---|---|---|---|---|---|---|---|
| | | | AFTER t MINUTES (ELAPSED-TIME VALUE) | AFTER t+1 MINUTES (ELAPSED-TIME VALUE) | AFTER t+2 MINUTES (ELAPSED-TIME VALUE) | AFTER t+3 MINUTES (ELAPSED-TIME VALUE) | AFTER t+4 MINUTES (ELAPSED-TIME VALUE) | ... |
| Battery_201 | car_101 | W1 | W2 | W3 | W4 | W5 | W6 | ... |
| Battery_202 | car_102 | X1 | X2 | X3 | X4 | X5 | X6 | ... |
| Battery_203 | car_103 | Y1 | Y2 | Y3 | Y4 | Y5 | Y6 | ... |
| Battery_204 | car_104 | Z1 | Z2 | Z3 | Z4 | Z5 | Z6 | ... |

Qs1     Qs2

Qs

EP 4 425 403 A1

## DATABASE UPDATE STEP (S35)

Fig.13

**80 SERVER DEVICE**

**100 VEHICLE**

S357 — No — ACQUIRE TRANSMISSION INFORMATION?

S351 — TRANSMISSION SPECIFIED TIME ELAPSED AFTER PREVIOUS TRANSMISSION TIMING? — No

Yes ↓ S358

**WRITE ACQUIRED TRANSMISSION INFORMATION IN DATABASE TO UPDATE DATABASE**

Yes ↓ S352

**CALCULATE ELAPSED-TIME VALUE OF CHARGING RATE OF MAIN BATTERY**

S353

**CALCULATE ELAPSED-TIME VALUE OF DEGRADATION DEGREE OF MAIN BATTERY**

S354

**ACQUIRE SECOND STATE QUANTITY CORRESPONDING TO ELAPSED-TIME VALUE OF STATE QUANTITY**

S355

**GENERATE TRANSMISSION INFORMATION**

> TRANSMISSION INFORMATION
>
> — VEHICLE IDENTIFICATION INFORMATION
>
> — ELAPSED-TIME VALUE OF STATE QUANTITY (OUTPUT CURRENT VALUE, OUTPUT VOLTAGE VALUE, TEMPERATURE, CHARGING RATE, DEGRADATION DEGREE) OF MAIN BATTERY } SECOND STATE QUANTITY

**RETURN**

**RETURN**

TRANSMIT TRANSMISSION INFORMATION (S356)

EP 4 425 403 A1

OPERATION CONTROL STEP (S4)　　　　　　　　　　Fig.14

SERVER DEVICE ～80

S401
DETERMINATION TIMING? — No

↓ Yes ┌S5
┌ABNORMALITY DETERMINATION STEP┐

┌S402
ABNORMAL STATE? — Yes

↓ No ┌S403　　　　　┌S404　　　ADJUSTMENT
DETERMINE TO | DETERMINE NOT TO } DETERMINATION
RECOMMEND MAINTENANCE | RECOMMEND MAINTENANCE | STEP

┌S405
ROUTE CHANGE INSTRUCTION

┌S406
TRAVELLING TO MAINTENANCE — No
FACTORY IS POSSIBLE?

↓ Yes ┌S407a　　　　┌S407b　　　　　┌S408
GENERATE FIRST | GENERATE SECOND | GENERATE REFERENCE
CHANGE CONTROL SIGNAL | CHANGE CONTROL SIGNAL | CONTROL SIGNAL

TRANSMIT RUNNING CONTROL SIGNAL (S409)

RETURN

┌100
VEHICLE

┌S411
RECEIVE RUNNING CONTROL — No
SIGNAL?

↓ Yes ┌S412
CONTROL ACTUATOR USING
RECEIVED RUNNING CONTROL
SIGNAL

RETURN

EP 4 425 403 A1

# Fig.15

```
        ┌────────────────────────┐
        │   START ABNORMALITY    │
        │   DETERMINATION STEP   │
        └────────────────────────┘
                    │
                    ▼            ┌S500
        ┌────────────────────────┐
        │    ACQUIRE DATABASE    │
        └────────────────────────┘
                    │
                    ▼            ┌S511
        ┌────────────────────────┐
        │CALCULATE SIMILARITY BETWEEN│
        │THOSE OF SAME TYPE OF STATE│
        │QUANTITY ACQUIRED AT SAME │
        │   ACQUISITION TIMING   │
        └────────────────────────┘
                    │
                    ▼            ┌S512
        ┌────────────────────────┐
        │   PERFORM CLUSTERING OF │
        │   THOSE OF SAME TYPE OF │
        │  STATE QUANTITY ACQUIRED │
        │AT SAME ACQUISITION TIMING│
        └────────────────────────┘
                    │
                    ▼            ┌S513
        ┌────────────────────────┐
        │RELATIVE COMPARISON BETWEEN│
        │STATE QUANTITIES ACQUIRED AT│
        │SAME ACQUISITION TIMING FOR│
        │EACH TYPE OF STATE QUANTITY│
        └────────────────────────┘
                    │
                    ▼            ┌S514
        ╱────────────────────────╲   No
        ╲STATE QUANTITY CLASSIFIED ╱────────┐
        ╱ AS OUTLIER INCLUDED?    ╲         │
         ╲────────────────────────╱         │
              │ Yes    ┌S515               │  ┌S516
              ▼                            ▼
        ┌──────────────┐          ┌──────────────┐
        │DETERMINED TO BE│        │DETERMINED TO BE│
        │ ABNORMAL STATE │        │ NORMAL STATE  │
        └──────────────┘          └──────────────┘
              │                            │
              ▼◄───────────────────────────┘
        ┌──────────────┐
        │     END      │
        └──────────────┘
```

Fig.16

STATE QUANTITY

Ct

Vo

Ct

Ct

Ct

Ct

● :FIRST VEHICLE
■ :SECOND VEHICLE
✕ :THIRD VEHICLE
▲ :FOURTH VEHICLE

ELAPSED TIME (MINUTES)

0    t    t+1    t+2    t+3    t+4

## Fig.17

```
    ┌─────────────────────────┐
    │   START ABNORMALITY     │
    │  DETERMINATION STEP     │
    └─────────────────────────┘
                 │
                 ▼              ┌S500
    ┌─────────────────────────┐
    │    ACQUIRE DATA SET     │
    └─────────────────────────┘
                 │
                 ▼              ┌S521
    ┌─────────────────────────┐
    │  GENERATE TIME SERIES   │
    │   DATA FOR EACH TYPE    │
    │   OF STATE QUANTITY     │
    └─────────────────────────┘
                 │
                 ▼              ┌S522
    ┌─────────────────────────┐
    │  CALCULATE SIMILARITY   │
    │  BETWEEN THOSE OF SAME  │
    │ TYPE OF TIME SERIES DATA│
    │    FOR EACH VEHICLE     │
    └─────────────────────────┘
                 │
                 ▼              ┌S523
    ┌─────────────────────────┐
    │   PERFORM CLUSTERING    │
    │   OF TIME SERIES DATA   │
    │   GENERATED FROM SAME   │
    │ TYPE OF STATE QUANTITIES│
    └─────────────────────────┘
                 │
                 ▼              ┌S524
    ┌─────────────────────────┐
    │  RELATIVE COMPARISON    │
    │   BETWEEN TIME SERIES   │
    │   DATA FOR EACH TYPE    │
    │   OF STATE QUANTITY     │
    └─────────────────────────┘
                 │
                 ▼              ┌S525
    ╱─────────────────────────╲   No
   ╱ TIME SERIES DATA CLASSIFIED INTO ╲─────────┐
   ╲ ABNORMAL CLUSTER INCLUDED?       ╱         │
    ╲─────────────────────────╱                 │
                 │ Yes    ┌S526                  │ ┌S527
                 ▼                               ▼
    ┌─────────────────────┐          ┌─────────────────────┐
    │  DETERMINED TO BE   │          │  DETERMINED TO BE   │
    │   ABNORMAL STATE    │          │    NORMAL STATE     │
    └─────────────────────┘          └─────────────────────┘
                 │                               │
                 ▼◄──────────────────────────────┘
    ┌─────────────────────────┐
    │          END            │
    └─────────────────────────┘
```

## Fig.18

STATE QUANTITY

G3,Ci

G1,Cs

G2,Cs

G4,Cs

ELAPSED TIME (MINUTES)

---------- : FIRST VEHICLE
---·---·--- : SECOND VEHICLE
————— : THIRD VEHICLE
--·--·--·-- : FOURTH VEHICLE

## Fig.19

```
   ( START ABNORMALITY
     DETERMINATION STEP )
              |
              v              S500
   [ ACQUIRE DATABASE ]
              |
              v                        S531
   < STATE QUANTITY ≧ ABNORMALITY THRESHOLD? >----No----+
              |                                          |
             Yes    S532                            v    S533
   [ DETERMINED TO BE ]              [ DETERMINED TO BE ]
   [ ABNORMAL STATE   ]              [ NORMAL STATE     ]
              |                                 |
              +<-------------------------------+
              |
              v
          ( END )
```

Fig.20

FIRST VEHICLE CONTROL DEVICE    60v,601v

SECOND VEHICLE CONTROL DEVICE    60v,602v

THIRD VEHICLE CONTROL DEVICE    60v,603v

FOURTH VEHICLE CONTROL DEVICE    60v,604v

SERVER DEVICE    80v

1v

# Fig.21

**FIRST VEHICLE CONTROL DEVICE** ⌐60v,601v

⌐62v

## VEHICLE CPU

| | |
|---|---|
| DEVICE IDENTIFICATION INFORMATION ACQUISITION UNIT | ~621 |
| VEHICLE IDENTIFICATION INFORMATION ACQUISITION UNIT | ~622 |
| CHARGING RATE CALCULATION UNIT | ~623 |
| DEGRADATION DEGREE CALCULATION UNIT | ~624 |
| VEHICLE SPEED CALCULATION UNIT | ~625 |
| STATE QUANTITY ACQUISITION UNIT | ~626 |
| TRANSMISSION INFORMATION GENERATION UNIT | ~627 |
| TRANSMISSION UNIT | ~628 |
| ABNORMALITY DETERMINATION UNIT | ~632 |
| INSTRUCTION UNIT | ~633 |
| SIGNAL GENERATION UNIT | ~634 |
| OPERATION CONTROL UNIT | ~630v |

⌐64
INPUT/OUTPUT INTERFACE

⌐66v
## VEHICLE STORAGE UNIT

| | |
|---|---|
| DEVICE IDENTIFICATION INFORMATION | ~Ei |
| VEHICLE IDENTIFICATION INFORMATION | ~Vi |
| DETECTION MODEL | ~DM |
| DATABASE | ~Db |
| ABNORMALITY DETERMINATION INFORMATION | ~Aj |

### REFERENCE ROUTE ~Ri

| | |
|---|---|
| FIRST REFERENCE ROUTE | ~Ri1 |
| SECOND REFERENCE ROUTE | ~Ri2 |

### STATE QUANTITY ~Qs

| | |
|---|---|
| FIRST STATE QUANTITY | ~Qs1 |
| SECOND STATE QUANTITY | ~Qs2 |

Fig.22

EP 4 425 403 A1

SERVER DEVICE ⌐80v

SERVER CONTROL DEVICE ⌐82v

PRODUCTION STATUS ACQUISITION UNIT ~820

TRANSMISSION INFORMATION ACQUISITION UNIT ~822

DATABASE WRITING UNIT ~823

UPDATE UNIT ~827

SERVER COMMUNICATION UNIT ⌐84

SERVER STORAGE UNIT ⌐86v

DATABASE ~Db

# Fig.23

## VEHICLE

```
        ┌─────────────────────┐
        │        START        │
        └─────────────────────┘
                   │
                   ▼                    ⌒S201
┌───────────────────────────────────────┐
│ ACQUIRE VEHICLE LOCATION INFORMATION USING│
│ DETECTION RESULT FROM EXTERNAL SENSOR  │
└───────────────────────────────────────┘
                   │
                   ▼                    ⌒S202
┌───────────────────────────────────────┐
│           DETERMINE NEXT              │
│           TARGET LOCATION             │
└───────────────────────────────────────┘
                   │
                   ▼                    ⌒S203
┌───────────────────────────────────────┐
│          GENERATE RUNNING             │
│           CONTROL SIGNAL              │
└───────────────────────────────────────┘
                   │
                   ▼                    ⌒S204
┌───────────────────────────────────────┐
│        CONTROL ACTUATOR USING         │
│         RUNNING CONTROL SIGNAL        │
└───────────────────────────────────────┘
                   │
                   ▼
        ┌─────────────────────┐
        │         END         │
        └─────────────────────┘
```

Europäisches
Patentamt

European
Patent Office

Office européen
des brevets

# EUROPEAN SEARCH REPORT

**Application Number**

EP 24 15 9424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/283007 A1 (CHOI CHI GUN [KR]) 10 September 2020 (2020-09-10) * paragraphs [0011], [0059] - [0064], [0078] - [0086]; figure 1 * ----- | 1-20 | INV. G06Q10/20 B60W60/00 G06Q50/04 G07C5/00 G05D1/698 |
| X | US 2022/073108 A1 (PARK JUN YEON [KR] ET AL) 10 March 2022 (2022-03-10) * paragraphs [0096] - [0103], [0115] - [0120]; figure 5 * ----- | 1-20 | |
| X | US 2022/032955 A1 (XIANG JINGYU [JP] ET AL) 3 February 2022 (2022-02-03) * paragraphs [0046] - [0060], [0094] * ----- | 1-20 | |

| | | |
|---|---|---|
| | | TECHNICAL FIELDS SEARCHED (IPC) |
| | | G06Q G07C B60W G05D |

The present search report has been drawn up for all claims

| Place of search | Date of completion of the search | Examiner |
|---|---|---|
| Munich | 24 June 2024 | González, Gonzalo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9424

This annex lists the patent family members relating to the patent documents cited in  the above-mentioned European search report.
The members are as contained in the European Patent Office EDP file on
The European Patent Office is in no way liable for these particulars which are merely given for the purpose of information.

24-06-2024

| Patent document cited in search report | Publication date | Patent family member(s) | Publication date |
|---|---|---|---|
| US 2020283007 A1 | 10-09-2020 | KR 20200119356 A<br>US 2020283007 A1 | 20-10-2020<br>10-09-2020 |
| US 2022073108 A1 | 10-03-2022 | KR 20220031846 A<br>US 2022073108 A1 | 14-03-2022<br>10-03-2022 |
| US 2022032955 A1 | 03-02-2022 | CN 113997950 A<br>JP 7466396 B2<br>JP 2022024741 A<br>JP 2024045402 A<br>US 2022032955 A1 | 01-02-2022<br>12-04-2024<br>09-02-2022<br>02-04-2024<br>03-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017 A

- JP 538619 A